# EUROPEAN PATENT SPECIFICATION

(11) **EP 3 955 367 B1**
(45) Date of publication and mention of the grant of the patent: **15.11.2023**
(21) Application number: 20798327.1
(22) Date of filing: 25.03.2020
(51) Int. Cl.: H01M 10/615, H01M 10/625, H01M 10/6568, B60K 11/04, B60L 58/27, H01M 10/659

(54) **BATTERY PACK HEATING APPARATUS, HEAT STORAGE APPARATUS AND ELECTRIC CAR**
AKKUPACK-HEIZVORRICHTUNG, WÄRMESPEICHER UND ELEKTROFAHRZEUG
APPAREIL DE CHAUFFAGE DE BLOC-BATTERIE, APPAREIL DE STOCKAGE DE CHALEUR ET VOITURE ÉLECTRIQUE

(30) Priority: 29.04.2019 CN 201910355865
(43) Date of publication of application: 16.02.2022
(73) Proprietor: Huawei Digital Power Technologies Co., Ltd., Shenzhen, Guangdong 518043 (CN)
(72) Inventor: HE, Huan, Shenzhen, Guangdong 518129 (CN)
(74) Representative: Pfenning, Meinig & Partner mbB
(86) International application number: PCT/CN2020/081069
(87) International publication number: WO 2020/220867

(56) References cited:
- CN-A- 107 444 103
- CN-A- 107 444 103
- CN-A- 107 719 151
- CN-A- 108 346 842
- CN-A- 110 112 509
- CN-U- 208 232 745
- JP-A- 2014 158 393
- JP-A- 2014 158 393

## Description

### TECHNICAL FIELD

This application relates to the field of mechanical technologies, and in particular, to a battery pack heating device and an electric car.

### BACKGROUND

With popularization of an electric car, the electric car is used in increasingly more environments. When the electric car runs in winter in a cold region, a problem of a battery charging difficulty at a low temperature occurs. Due to the battery charging difficulty at the low temperature, there is insufficient power to support startup of the electric car. As a result, the electric car is difficult to start at the low temperature. After the electric car is started, there is also a problem, for example, a weak endurance capability in a low temperature state. Because a chemical power supply is sensitive to a temperature, the foregoing problems are difficult to be resolved by changing a battery, for example, changing a battery material or the like.

To improve an application capability of the electric car in the cold region, it is proposed in a conventional technology that a PTC heater is used to heat a battery pack, to increase a temperature of the battery pack, thereby resolving problems such as the charging difficulty at the low temperature, the difficulty in starting the electric car at the low temperature, and a shortened endurance mileage of the electric car.

However, a heating manner using the PTC heater in the conventional technology not only has a problem of slow heating, but also has great heat consumption. Therefore, a more environment-friendly and energy-saving battery pack heating solution is urgently needed.

JP 2014 158393 A discloses a vehicle and a temperature control method for a battery unit.

CN 107 444 103 A discloses an integrated thermal management system for electric vehicles.

### SUMMARY

This application provides a battery pack heating device according to claim 1 and an electric car according to claim 8, to store, in a first heat storage apparatus, heat generated by a heat generating element, and heat a battery pack by using the heat stored in the first heat storage apparatus. That is, waste heat generated by another heat generating element is used to heat the battery pack, thereby providing an environment-friendly and energy-saving battery pack heating solution.

According to a first aspect, an embodiment of this application provides a battery pack heating device. The battery pack heating device includes a battery pack system and a heating system. The battery pack system includes at least a liquid heat exchange apparatus and a first pipe, where the liquid heat exchange apparatus is connected in series on the first pipe, and the liquid heat exchange apparatus is configured to heat a battery pack. The heating system includes at least one heat generating element, a first heat storage apparatus, a second pipe, and a reversing valve, where the at least one heat generating element and the first heat storage apparatus are connected by using the second pipe, and the first heat storage apparatus may include a first phase change material. The reversing valve is disposed between the first pipe and the second pipe, and the reversing valve is configured to control connection and disconnection between the first pipe and the second pipe. When the first pipe and the second pipe are in a disconnected state, heat generated by the at least one heat generating element is transferred to the first heat storage apparatus by using the second pipe, and the first phase change material in the first heat storage apparatus may perform a phase change to store the heat generated by the at least one heat generating element. When the first pipe and the second pipe are in a connected state, the first phase change material in the first heat storage apparatus may perform a phase change to release heat, and the released heat is transferred to the liquid heat exchange apparatus by using the first pipe and the second pipe, to heat the battery pack.

In this application, the battery pack heating device includes the battery pack system and the heating system. The battery pack system includes at least the liquid heat exchange apparatus and the first pipe, where the liquid heat exchange apparatus is connected in series on the first pipe, and is configured to heat the battery pack. The heating system includes the at least one heat generating element, the first heat storage apparatus, and the second pipe, where the at least one heat generating element and the first heat storage apparatus are connected by using the second pipe. Because the reversing valve is disposed between the first pipe and the second pipe, the reversing valve may be configured to control connection and disconnection between the first pipe and the second pipe. When the first pipe and the second pipe are in the disconnected state, the heat generated by the heat generating element can be transferred to the first heat storage apparatus by using the second pipe, and can be stored by using the first heat storage apparatus. When the first pipe and the second pipe are in the connected state, the heat stored in the first heat storage apparatus can be released and transferred to the liquid heat exchange apparatus by using the first pipe and the second pipe, to heat the battery pack. In the foregoing manner, the heat generated by the heat generating element can be stored in the first heat storage apparatus, and the battery pack can be heated by using the heat stored in the first heat storage apparatus. That is, waste heat generated by another heat generating element is used to heat the battery pack, thereby providing an environment-friendly and energy-saving battery pack heating solution.

In a possible implementation of the first aspect, the heating system may further include a first control valve and a second control valve, the second pipe includes a third pipe and a fourth pipe, and the fourth pipe is a bypass pipe of the third pipe. The at least one heat generating element and the first control valve are connected in series on the third pipe, and the second control valve is connected in series on the fourth pipe. Both the first control valve and the second control valve may be electromagnetic valves or electro-hydraulic valves. When the first pipe and the second pipe are in the disconnected state, the first control valve is in an opened state, and the second control valve is in a closed state, the at least one heat generating element is connected to the first heat storage apparatus, and the heat generated by the at least one heat generating element is transferred to the first heat storage apparatus by using the second pipe, and is stored by using the first heat storage apparatus. When the first pipe and the second pipe are in the connected state, the first control valve is in the closed state, and the second control valve is in the opened state, the at least one heat generating element is bypassed, and the heat released by the first heat storage apparatus is transferred to the liquid heat exchange apparatus by using the first pipe and the fourth pipe, to heat the battery pack.

In this application, when the battery pack needs to be heated, the reversing valve is controlled to rotate so that the first pipe and the second pipe are in the connected state, and when the first control valve is in the closed state and the second control valve is in the opened state, the at least one heat generating element can be bypassed. That is, liquid in the second pipe no longer flows through the third pipe in the second pipe, but flows directly through the fourth pipe in the second pipe to the first heat storage apparatus, and the liquid in the second pipe is heated by the heat released by the first heat storage apparatus, so that the heated liquid flows between the first pipe and the second pipe to transfer the heat to the liquid heat exchange apparatus, to heat the battery pack. In the foregoing manner, when the battery pack is heated, the heated liquid does not flow through the heat generating element. Therefore, the heat generating element is prevented from being damaged by a high temperature, helping prolong a service life of the heat generating element, and helping improve running stability of the heat generating element.

In a possible implementation of the first aspect, the heating system may further include a fifth pipe, a third control valve, and a fourth control valve. The fifth pipe is a bypass pipe of the first heat storage apparatus, and the third control valve is connected in series on the fifth pipe. The fourth control valve is connected in series to the first heat storage apparatus. Both the third control valve and the fourth control valve may be electromagnetic valves or electro-hydraulic valves. When the first pipe and the second pipe are in the connected state, the first control valve is in the opened state, the second control valve is in the closed state, the third control valve is in the opened state, and the fourth control valve is in the closed state, the first heat storage apparatus is bypassed, and the heat generated by the at least one heat generating element is transferred to the liquid heat exchange apparatus by using the third pipe, the fifth pipe, and the first pipe, to heat the battery pack.

In this application, the heat may be stored in the first heat storage apparatus, and the battery pack may be heated by releasing the heat by the first heat storage apparatus. Alternatively, the heat generated by the heat generating element may be directly transferred to the liquid heat exchange apparatus, to heat the battery pack. When weather is relatively cold, the battery pack may be heated during driving, thereby prolonging a battery life of the battery pack, expanding an application scenario of this solution, and improving comprehensiveness of this solution.

According to the first aspect, the first heat storage apparatus includes a first phase change material, a housing, and a pipe located in the first heat storage apparatus among pipes included in the second pipe, and the first phase change material is located between the housing of the first heat storage apparatus and the second pipe. When the at least one heat generating element transfers the generated heat to the first heat storage apparatus by using the second pipe, the first phase change material changes from a solid state to liquid, to store the heat. When the battery pack in the battery pack system is heated, the first phase change material changes from the liquid to the solid state to release the heat, and the released heat is transferred to the liquid heat exchange apparatus by using the second pipe and the first pipe, to heat the battery pack.

In this application, if a phase change material with a phase change between a liquid state and a gaseous state is selected, pressure in the heat storage apparatus may greatly increase when a phase change from the liquid state to the gaseous state occurs. In this solution, a phase change material with a phase change between the solid state and the liquid state is selected. Increased pressure caused by a phase change from the solid state to the liquid state is relatively small, thereby avoiding a danger such as a phase change or explosion of the heat storage apparatus caused by a pressure increase, and ensuring stability and safety of the heat storage apparatus.

Accordng to the first aspect, the battery pack heating device further includes an air conditioning system. The air conditioning system includes a heat exchanger, a compressor, a second heat storage apparatus, and a sixth pipe, and the sixth pipe connects the heat exchanger, the compressor, and the second heat storage apparatus in series. The second heat storage apparatus includes a second phase change material, a housing, and a pipe located in the second heat storage apparatus among pipes included in the sixth pipe, and the second phase change material is located between the housing of the second heat storage apparatus and the sixth pipe. The second heat storage apparatus is connected to the first heat storage apparatus. When the first pipe and the second pipe are in the disconnected state, and the air conditioning system is in a cooling state, the compressor is used to transfer heat absorbed by the heat exchanger during working to the second heat storage apparatus by using the pipe in the air conditioning system, and the second phase change material changes from the solid state to liquid, to store the heat. When the battery pack is heated by using the first heat storage apparatus, the second phase change material changes from the liquid to the solid state to release the heat, and the released heat is transferred to the first heat storage apparatus in a heat conduction manner.

In this application, the battery pack heating device may further include the air conditioning system, the air conditioning system includes the second heat storage apparatus, and the second heat storage apparatus is fixedly connected to the first heat storage apparatus, so that heat generated during cooling of the air conditioning system can be stored to heat the battery pack, and waste heat generated by the air conditioning system is reused. In a region with a large temperature difference between day and night, a cooling time of the air conditioning system is long during the day. Therefore, a large amount of waste heat is generated. In the foregoing manner, an application scenario of this solution is broadened, and environmental protection performance of this solution is further improved.

In a possible implementation of the first aspect, a critical temperature of the first phase change material is 60 degrees Celsius to 80 degrees Celsius, and a critical temperature of the second phase change material is 40 degrees Celsius to 50 degrees Celsius.

In a possible implementation of the first aspect, a thermally conductive medium is disposed between the first heat storage apparatus and the second heat storage apparatus.

In this application, the thermally conductive medium between the first heat storage apparatus and the second heat storage apparatus fills a gap between the first heat storage apparatus and the second heat storage apparatus, to help improve a thermal conduction capability between the first heat storage apparatus and the second heat storage apparatus, thereby improving a speed of a heating process.

In a possible implementation of the first aspect, the housing of the first heat storage apparatus and the housing of the second heat storage apparatus are further wrapped in thermal insulation materials.

In this application, the housing of the first heat storage apparatus and the housing of the second heat storage apparatus are wrapped in the thermal insulation materials, to further prevent heat exchange between the phase change materials in the heat storage apparatuses and the outside, thereby improving heat storage performance of the first heat storage apparatus and the second heat storage apparatus.

In a possible implementation of the first aspect, the pipe located in the first heat storage apparatus among the pipes included in the second pipe is covered with a first fixing apparatus, the pipe located in the second heat storage apparatus among the pipes included in the sixth pipe is covered with a second fixing apparatus, and both the first fixing apparatus and the second fixing apparatus are thermally conductive media. Both the first fixing apparatus and the second fixing apparatus may be aluminum.

In this application, because both the first fixing apparatus and the second fixing apparatus are thermally conductive media, the first fixing apparatus and the second fixing apparatus not only can fix the pipes in the first heat storage apparatus and the second heat storage apparatus, but also provide good heat conduction for heat exchange between the pipes and the phase change materials.

In a possible implementation of the first aspect, when the air conditioning system is in a heating state, the first heat storage apparatus may transfer the released heat to the second heat storage apparatus in a heat conduction manner, so that heat released by the first heat storage apparatus and the second heat storage apparatus is transferred to the heat exchanger by using the compressor.

According to a second aspect, an embodiment of this application provides an electric car, including a battery pack heating device, a battery pack, and a battery pack management system. The battery pack heating device is the battery pack heating device described in the first aspect. The battery pack management system is connected to the battery pack and the battery pack heating device, and the battery pack management system is configured to collect information about the battery pack and control the battery pack heating device to heat the battery pack.

For specific implementations and beneficial effects of components of the battery pack heating device included in the electric car provided in the second aspect of this application, refer to the first aspect and various possible implementations of the first aspect. Details are not described herein.

### BRIEF DESCRIPTION OF DRAWINGS

FIG. 1 is a schematic diagram of a structure of a battery pack heating device according to an embodiment of this application;
FIG. 2 is another schematic diagram of a structure of a battery pack heating device according to an embodiment of this application;
FIG. 3 is still another schematic diagram of a structure of a battery pack heating device according to an embodiment of this application;
FIG. 4 is yet another schematic diagram of a structure of a battery pack heating device according to an embodiment of this application;
FIG. 5 is yet another schematic diagram of a structure of a battery pack heating device according to an embodiment of this application;
FIG. 6 is yet another schematic diagram of a structure of a battery pack heating device according to an embodiment of this application;
FIG. 7 is yet another schematic diagram of a structure of a battery pack heating device according to an embodiment of this application;
FIG. 8 is a schematic diagram of a structure of a heat storage device according to an embodiment of this application;
FIG. 9 is a schematic diagram of a structure of an electric car according to an embodiment of this application; and
FIG. 10 is a schematic flowchart of a heating method according to an embodiment of this application.

### DESCRIPTION OF EMBODIMENTS

Embodiments of this application provide a battery pack heating device, a heat storage device, and an electric car, to store, in a first heat storage apparatus, heat generated by a heat generating element, and heat a battery pack by using the heat stored in the first heat storage apparatus. That is, waste heat generated by another heat generating element is used to heat the battery pack, thereby providing an environment-friendly and energy-saving battery pack heating solution.

In the specification, claims, and accompanying drawings of this application, the terms "first", "second", and so on (if existent) are intended to distinguish between similar objects, but do not necessarily indicate a specific order or sequence. It should be understood that the data termed in such a way are interchangeable in appropriate circumstances, so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other steps or units not expressly listed or inherent to such a process, method, product, or device.

It should be understood that the battery pack heating device provided in the embodiments of this application may be applied to an application scenario of heating a battery pack of an electric car. Specifically, the electric car includes the battery pack and at least one heat generating element. The at least one heat generating element included in the electric car may be represented as a motor controller unit (motor controller unit, MCU), an on-board charger (on-board charger, OBC), a heat generating element in the electric car, or the like. Therefore, heat generated by the heat generating element in the electric car can be stored to heat the battery pack of the electric car. The battery pack heating device may also be applied to an application scenario of heating a battery pack of an electric trolley. Specifically, the electric trolley includes the battery pack and at least one heat generating element. The at least one heat generating element included in the electric trolley may be represented as an MCU, a direct current chopper, a heat generating element in the electric trolley, or the like. Therefore, heat generated by the heat generating element in the electric trolley can be stored to heat the battery pack of the electric trolley. It should be understood that the battery pack heating device provided in the embodiments of this application may be further applied to another device, provided that the device includes both a battery pack and at least one heat generating element. In the embodiments of this application, description is provided only by using an example in which the battery pack heating device provided in the embodiments of this application is applied to an electric car.

The following further describes this application in detail with reference to the accompanying drawings in the embodiments of this application. It is clear that the described embodiments are merely some but not all of the embodiments of the present invention.

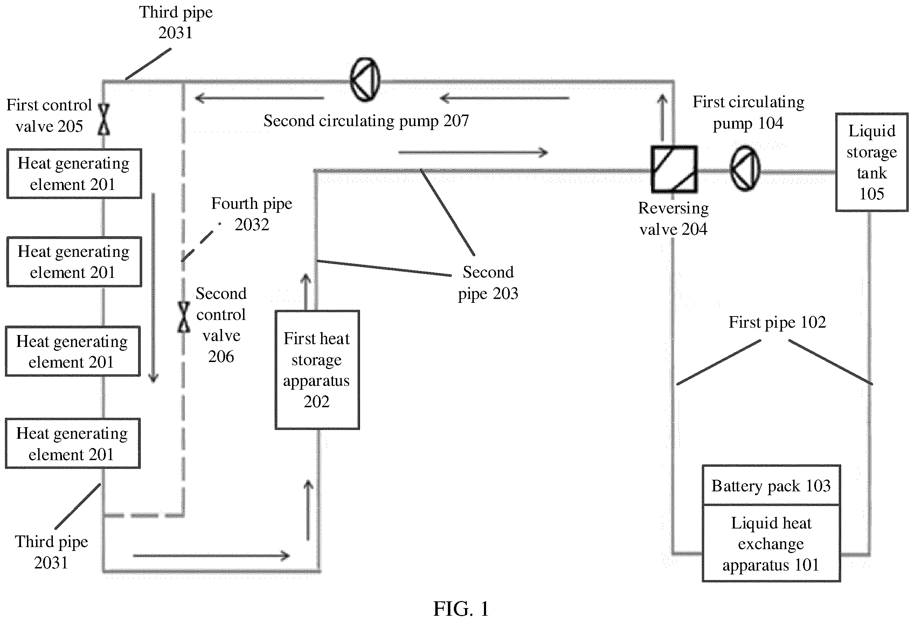

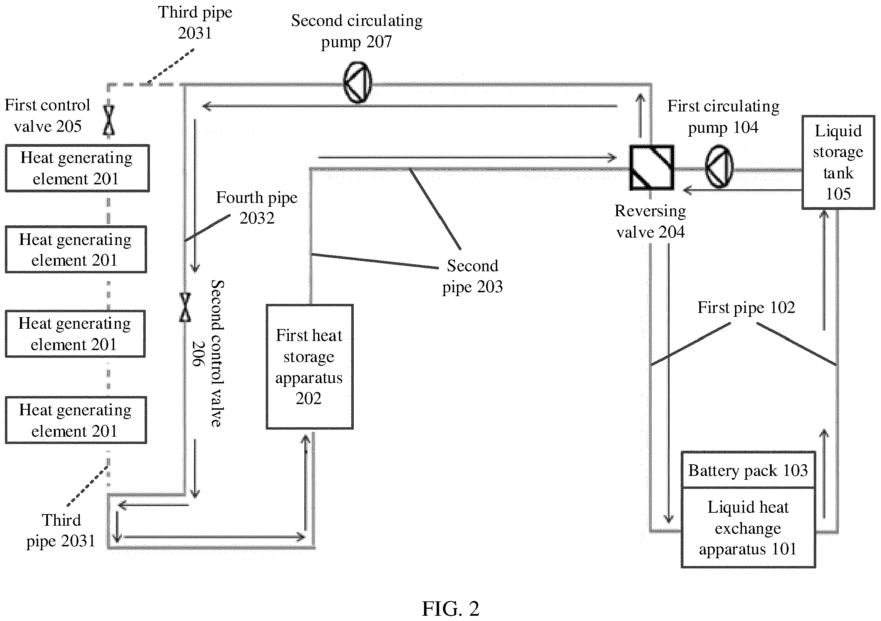

FIG. 1 and FIG. 2 are two schematic diagrams of structures of a battery pack heating device according to an embodiment of this application. A battery pack heating device 10 includes at least a battery pack system 100 and a heating system 200. The battery pack system 100 includes at least a liquid heat exchange apparatus 101 and a first pipe 102, where the liquid heat exchange apparatus 101 is connected in series on the first pipe 102, and the liquid heat exchange apparatus 101 is configured to heat a battery pack 103. The heating system 200 includes at least one heat generating element 201, a first heat storage apparatus 202, a second pipe 203, and a reversing valve 204, where the at least one heat generating element 201 and the first heat storage apparatus 202 are connected by using the second pipe 203. The reversing valve 204 is disposed between the first pipe 102 and the second pipe 203, and the reversing valve is configured to control connection and disconnection between the first pipe 102 and the second pipe.

When the first pipe 102 and the second pipe 203 are in a disconnected state, heat generated by the at least one heat generating element 201 is transferred to the first heat storage apparatus 202 by using the second pipe 203, and is stored by using the first heat storage apparatus 202. When the first pipe 102 and the second pipe 203 are in a connected state, heat released by the first heat storage apparatus 202 is transferred to the liquid heat exchange apparatus 101 by using the first pipe 102 and the second pipe 203, to heat the battery pack 103.

In this embodiment of this application, the liquid heat exchange apparatus 101 heats the battery pack 103 by using liquid that is stored in the liquid heat exchange apparatus 101 and that has a heat exchange function. Because the liquid heat exchange apparatus 101 is connected in series on the first pipe 102, the same liquid having the heat exchange function is stored in the first pipe 102 and the liquid heat exchange apparatus 101. The liquid heat exchange apparatus 101 may be specifically presented as a plate-shaped liquid heat exchange apparatus 101. A cross-sectional shape of the liquid heat exchange apparatus 101 may be a rectangle, a square, a circle, or the like. A specific cross-sectional shape of the liquid heat exchange apparatus 101 may be determined with reference to a shape of the battery pack 103, and is not specifically limited herein.

The liquid heat exchange apparatus 101 is in contact with and connected to the battery pack 103, so that heat of the liquid heat exchange apparatus 101 can be transferred to the battery pack 103, to heat the battery pack 103. A specific connection relationship between the liquid heat exchange apparatus 101 and the battery pack 103 may be understood with reference to a technology in the art. Details are not provided herein.

The liquid heat exchange apparatus 101 and the first pipe 102 are fixedly connected, and may be specifically in an integrated connection, a threaded connection, a bolted connection, or the like. A material of the liquid heat exchange apparatus 101 and a material of the first pipe 102 may be the same, for example, are both alloy steel, reinforced plastic, aluminum, carbon fiber, or another type of hard material that is not easy to deform. The material of the liquid heat exchange apparatus 101 and the material of the first pipe 102 may be different. For example, the material of the liquid heat exchange apparatus 101 is hard plastic, and the material of the first pipe 102 is stainless steel. This is not specifically limited herein.

The heat generating element 201 refers to an element that generates heat during working, and includes but is not limited to an MCU, an OBC, a direct current chopper, a motor (motor), or the like. The MCU is also referred to as a motor controller, and is configured to control a rotation state of the motor. The OBC is an on-board charger, and is configured to dynamically adjust a charging current or voltage parameter to fully charge the battery pack safely and automatically. The direct current chopper is configured to convert electric energy of one voltage value into electric energy of another voltage value in a direct current circuit. The motor is configured to provide power. A person skilled in the art may understand a material and an internal structure of the foregoing heat generating element with reference to a conventional technology in the art, and details are not described herein. It should be noted that although four heat generating elements are shown in FIG. 1 and FIG. 2, it should be understood that FIG. 1 and FIG. 2 are merely for ease of understanding this solution, and are not used to limit this solution.

The at least one heat generating element 201 is connected in series on the second pipe 203. Each heat generating element 201 and the second pipe 203 are fixedly connected, and may be specifically in a bolted connection, a threaded connection, or another connection manner. A material of the second pipe 203 includes but is not limited to alloy steel, reinforced plastic, aluminum, carbon fiber, or the like. This is not specifically limited herein.

The heating system 200 may further include a second circulating pump 207. The second circulating pump 207 is also connected in series on the second pipe 203, and is configured to provide flowing power for liquid in the second pipe 203. Certainly, the liquid in the second pipe 203 may not flow, and liquid at the first heat storage apparatus 202 is heated in a manner of heat conduction between liquid. In this embodiment of this application, description is provided only by using an example in which the heating system 200 includes the second circulating pump 207. Specifically, liquid flowing in the first pipe 102 and liquid flowing in the second pipe 203 may be of a same material, for example, a mixture of water and ethylene glycol, brine, or liquid ammonia.

In addition, the battery pack system 100 may further include a first circulating pump 104. The first circulating pump 104 is connected in series on the first pipe 102, and is configured to provide flowing power for liquid in the first pipe 102. Certainly, the liquid in the first pipe 102 may not flow, and liquid at the liquid heat exchange apparatus 101 is heated in a manner of heat conduction between liquid. Alternatively, power provided by the second circulating pump 207 may be used. In this embodiment of this application, description is provided only by using an example in which the battery pack system 100 includes the first circulating pump 104.

The reversing valve 204 is disposed between the first pipe 102 and the second pipe 203, and can perform a rotation operation to control the first pipe 102 and the second pipe 203 to switch between the connected state and the disconnected state. The reversing valve may be fixedly connected to the first pipe 102 and the second pipe 203, and a connection manner may be a bolted connection, a threaded connection, or the like. This is not specifically limited herein. Specifically, the reversing valve 204 may be an electromagnetic reversing valve, an electro-hydraulic reversing valve, or the like. More specifically, the reversing valve 204 may be a four-way reversing valve.

The first heat storage apparatus 202 is connected in series on the second pipe 203. That is, a pipe in the second pipe 203 passes through the first heat storage apparatus, and is wrapped in the first heat storage apparatus 202. A first phase change material 2021 is disposed in the first heat storage apparatus 202. A phase change material refers to a substance that can change a status of the substance with a temperature change and that can provide heat, and a large amount of heat can be absorbed or released in a phase change process of the phase change material. Therefore, when liquid with a relatively high temperature in the second pipe 203 flows to the first heat storage apparatus 202, the first phase change material 2021 in the first heat storage apparatus 202 may perform a phase change to absorb and store heat. When liquid with a relatively low temperature in the second pipe 203 flows to the first heat storage apparatus 202, the first phase change material 2021 in the first heat storage apparatus 202 may perform a phase change to release the heat, to heat the liquid in the second pipe 203. The first phase change material 2021 may be a phase change material that performs a phase change between a solid state and a liquid state, or may be a phase change material that performs a phase change between solid states, or may be a phase change material that performs a phase change between a liquid state and a gaseous state, or the like. This is not specifically limited herein. Optionally, the first phase change material 2021 is a phase change material that performs a phase change between a solid state and a liquid state. When the heat generating element 201 transfers generated heat to the first heat storage apparatus 202 by using the second pipe 203, the first phase change material 2021 changes from the solid state to liquid, to store the heat. When the heat stored in the first heat storage apparatus 202 needs to be released to heat the battery pack in the battery pack system, the first phase change material 2021 changes from the liquid to the solid state, to release the heat.

In this embodiment of this application, when heat generated by the at least one heat generating element 201 needs to be stored, the reversing valve 204 may be controlled to rotate so that the first pipe 102 and the second pipe 203 are in the disconnected state. The at least one heat generating element 201 connected in series on the second pipe 203 heats the liquid in the second pipe 203 in a heat conduction manner, and the liquid in the second pipe 203 continuously flows by using the power provided by the second circulating pump 207. Therefore, the heat generated by the at least one heat generating element 201 is transferred to the first heat storage apparatus 202 through the flowing of the liquid in the second pipe 203, and is stored by using the first heat storage apparatus 202. When the battery pack 103 needs to be heated, the reversing valve 204 may be controlled to rotate so that the first pipe 102 and the second pipe 203 are in the connected state, and the liquid in the second pipe 203 is heated by the heat released by the first heat storage apparatus 202. Power provided by the first circulating pump 104 and the second circulating pump 207 enables the heated liquid to flow between the first pipe 102 and the second pipe 203, to transfer the heat to the liquid heat exchange apparatus 101 to heat the battery pack.

In addition, the battery pack system 100 may further include a liquid storage tank 105, and the liquid storage tank 105 is fixedly connected to the first pipe 102 and stores liquid flowing in the first pipe 102. Because the liquid in the first pipe 102 may be lost during flowing, liquid may be added to the first pipe 102 by using the liquid storage tank 105 in a timely manner, to ensure that there is plenty of liquid in the first pipe 102 to heat the battery pack 103. Certainly, the battery pack system 100 may alternatively not include the liquid storage tank 105. This should be specifically determined based on an actual situation.

In this embodiment of this application, the battery pack heating device 10 includes the battery pack system 100 and the heating system 200. The battery pack system 100 includes at least the liquid heat exchange apparatus 101 and the first pipe 102, where the liquid heat exchange apparatus 101 is connected in series on the first pipe 102, and is configured to heat the battery pack 103. The heating system 200 includes the at least one heat generating element 201, the first heat storage apparatus 202, and the second pipe 203, where the at least one heat generating element 201 and the first heat storage apparatus 202 are connected by using the second pipe 203. Because the reversing valve 204 is disposed between the first pipe 102 and the second pipe 203, the reversing valve 204 may be configured to control connection and disconnection between the first pipe 102 and the second pipe 203. When the first pipe 102 and the second pipe 203 are in the disconnected state, the heat generated by the heat generating element can be transferred to the first heat storage apparatus 202 by using the second pipe 203, and can be stored by using the first heat storage apparatus 202. When the first pipe 102 and the second pipe 203 are in the connected state, the heat stored in the first heat storage apparatus 202 can be released and transferred to the liquid heat exchange apparatus 101 by using the first pipe 102 and the second pipe 203, to heat the battery pack 103. In the foregoing manner, the heat generated by the heat generating element 201 can be stored in the first heat storage apparatus 202, and the battery pack can be heated by using the heat stored in the first heat storage apparatus 202. That is, waste heat generated by another heat generating element 201 is used to heat the battery pack, thereby providing an environment-friendly and energy-saving battery pack heating solution.

Specifically, in an implementation, further referring to FIG. 1, the heating system 200 may further include a first control valve 205 and a second control valve 206, the second pipe 203 includes a third pipe 2031 and a fourth pipe 2032, and the fourth pipe 2032 is a bypass pipe of the third pipe 2031. The at least one heat generating element 201 and the first control valve 205 are connected in series on the third pipe 2031. The second control valve 206 is connected in series on the fourth pipe 2032. When the first pipe 102 and the second pipe 203 are in the disconnected state, the first control valve 205 is in an opened state, and the second control valve 206 is in a closed state, the at least one heat generating element 201 is connected to the first heat storage apparatus 202, and the heat emitted by the at least one heat generating element 201 can be transferred to the first heat storage apparatus 202 by using the second pipe 203, and can be stored by using the first heat storage apparatus 202. When the first pipe 102 and the second pipe 203 are in the connected state, the first control valve 205 is in the closed state, and the second control valve 206 is in the opened state, the at least one heat generating element 201 is bypassed, and the heat stored in the first heat storage apparatus 202 is released and transferred to the liquid heat exchange apparatus 101 by using the first pipe 102 and the second pipe 203, to heat the battery pack.

The first control valve 205 is configured to control connection and disconnection of the third pipe 2031, and the second control valve 206 is configured to control connection and disconnection of the fourth pipe 2032. Both the first control valve 205 and the second control valve 206 are electric valves, and may be specifically electromagnetic valves, electro-hydraulic valves, another type of electric valve, or the like, which is not limited herein.

In this embodiment, when the heat generated by the at least one heat generating element 201 needs to be stored, the reversing valve 204 is controlled to rotate so that the first pipe 102 and the second pipe 203 are in the disconnected state, and when the first control valve 205 is in the opened state and the second control valve 206 is in the closed state, the third pipe 2031 on which the at least one heat generating element 201 is connected in series is connected to the second pipe 203 on which the first heat storage apparatus 202 is connected in series, so that the heat emitted by the heat generating element 201 can be transferred to the first heat storage apparatus 202 by using the second pipe 203. When the battery pack 103 needs to be heated, the reversing valve 204 is controlled to rotate so that the first pipe 102 and the second pipe 203 are in the connected state, and when the first control valve 205 is in the closed state and the second control valve 206 is in the opened state, the at least one heat generating element 201 can be bypassed. That is, the liquid in the second pipe 203 no longer flows through the third pipe 2031 in the second pipe 203, but flows directly through the fourth pipe 2032 in the second pipe 203 to the first heat storage apparatus 202, and the liquid in the second pipe 203 is heated by the heat released by the first heat storage apparatus 202, so that the heated liquid flows between the first pipe 102 and the second pipe 203 to transfer the heat to the liquid heat exchange apparatus 101, to heat the battery pack. In the foregoing manner, when the battery pack 103 is heated, the heated liquid does not flow through the heat generating element 201. Therefore, the heat generating element 201 is prevented from being damaged by a high temperature, helping prolong a service life of the heat generating element 201, and helping improve running stability of the heat generating element 201.

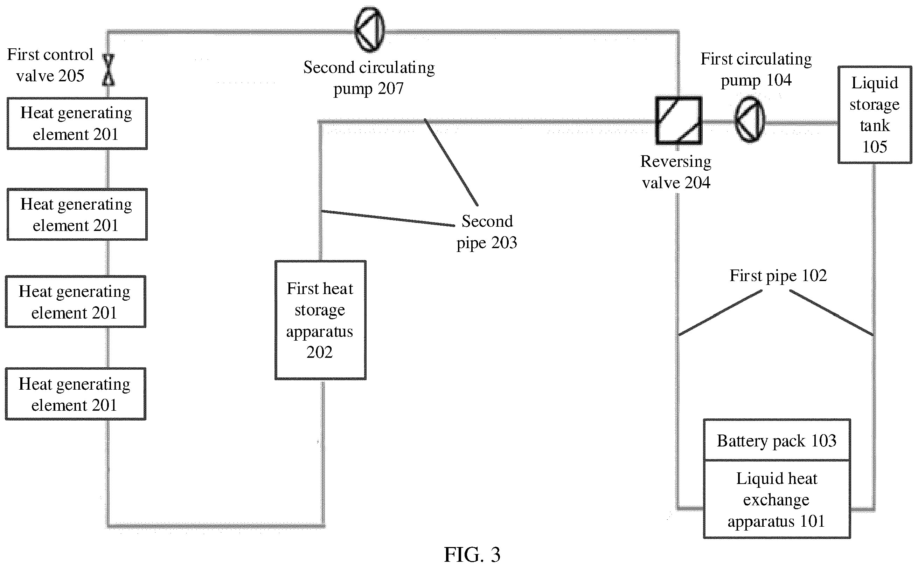

In another implementation, FIG. 3 is another schematic diagram of a structure of the battery pack heating device 10 according to this embodiment of this application. The heating system 200 includes the third pipe 2031 on which the at least one heat generating element 201 is connected in series and the first control valve 205. The first control valve 205 is also connected in series on the third pipe 2031. The heating system 200 does not include the second control valve 206, and the second pipe 203 does not include the fourth pipe 2032. When the battery pack 103 does not need to be heated, the reversing valve 204 is controlled to rotate so that the first pipe 102 and the second pipe 203 are in the disconnected state, and the first control valve 205 and the second circulating pump 207 are opened so that the heat emitted by the heat generating element 201 is transferred to the first heat storage apparatus 202 by using the second pipe 203. When the battery pack 103 needs to be heated, the reversing valve 204 is controlled to rotate so that the first pipe 102 and the second pipe 203 are in the connected state, and the first control valve 205 and the second circulating pump 207 are opened so that the heat stored in the first heat storage apparatus 202 is released and transferred to the liquid heat exchange apparatus 101 by using the first pipe 102 and the second pipe 203, to heat the battery pack.

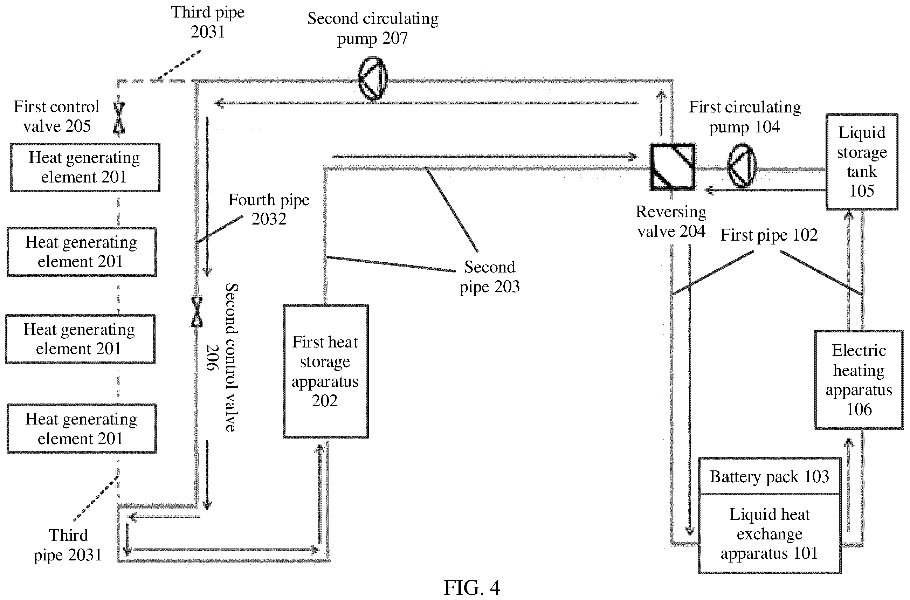

Optionally, FIG. 4 is another schematic diagram of a structure of the battery pack heating device according to this embodiment of this application. The battery pack system 100 further includes an electric heating apparatus 106, and the electric heating apparatus 106 and the liquid heat exchange apparatus 101 are connected in series by using the first pipe 102. When the first pipe 102 and the second pipe 203 are in the connected state, if a temperature of the battery pack 103 is higher than a preset threshold, the electric heating apparatus 106 is in a turned-off state, and the battery pack is heated by using the heat released by the first heat storage apparatus 202. When the first pipe 102 and the second pipe 203 are in the connected state, if the temperature of the battery pack 103 is lower than the preset threshold, the electric heating apparatus 106 is in a turned-on state, and the battery pack 103 is heated by using the heat released by the first heat storage apparatus 202 and heat released by the electric heating apparatus 106.

The electric heating apparatus 106 is an apparatus for releasing heat to heat the liquid in the first pipe 102 when the electric heating apparatus 106 is powered on. The electric heating apparatus 106 is connected in series on the first pipe 102. That is, a pipe in the first pipe 102 is wrapped in the electric heating apparatus 106. Specifically, the electric heating apparatus 106 may be a PTC heater, an induction heater, another type of electric heating apparatus 106, or the like. The preset threshold of the temperature of the battery pack 103 may be 10 degrees Celsius, 8 degrees Celsius, or the like, may be specifically determined with reference to a requirement of a person skilled in the art for heating duration of the battery pack 103, and is not limited herein.

In this embodiment, when the battery pack 103 needs to be heated, if the temperature of the battery pack 103 is higher than the preset threshold, the electric heating apparatus 106 does not need to be turned on, that is, the electric heating apparatus 106 is in the turned-off state, and the battery pack is heated by using the heat released by the first heat storage apparatus 202. If the temperature of the battery pack 103 is lower than the preset threshold, the battery pack 103 needs to be heated by using both the heat released by the first heat storage apparatus 202 and the heat released by the electric heating apparatus 106, that is, the electric heating apparatus 106 is in the turned-on state. In the foregoing manner, when needed, the electric heating apparatus 106 is in the turned-on state, thereby shortening a heating time of the battery pack 103. When not needed, the electric heating apparatus 106 is in the turned-off state, thereby avoiding waste of electric energy and improving flexibility of a heating process.

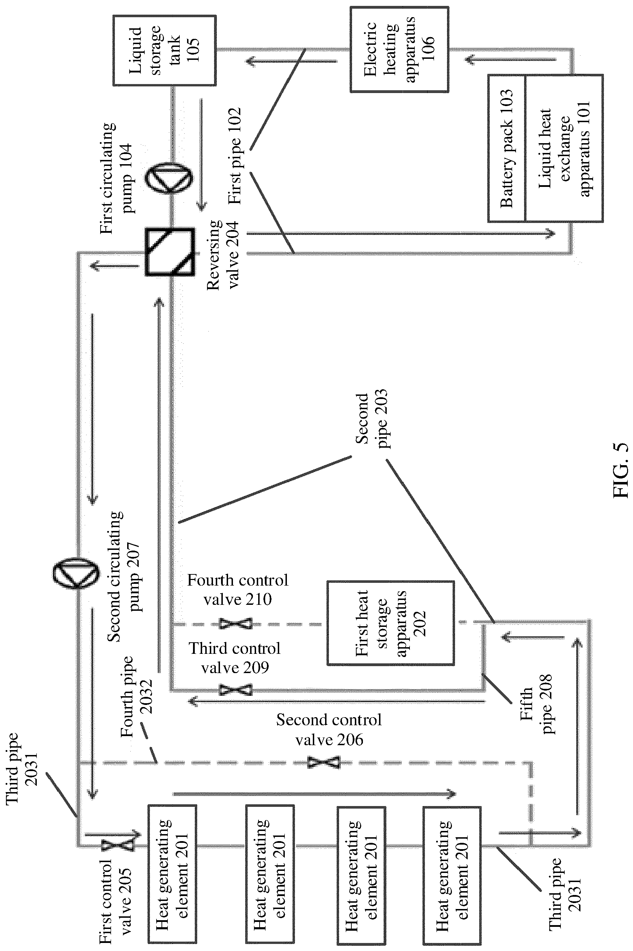

Optionally, FIG. 5 is another schematic diagram of a structure of the battery pack heating device according to this embodiment of this application. The heating system 200 may further include a fifth pipe 208, a third control valve 209, and a fourth control valve 210. The fifth pipe 208 is a bypass pipe of the first heat storage apparatus 202, and the third control valve 209 is connected in series on the fifth pipe 208. The fourth control valve 210 is connected in series to the first heat storage apparatus 202. When the first pipe 102 and the second pipe 203 are in the connected state, the first control valve 205 is in the opened state, the second control valve 206 is in the closed state, the third control valve 209 is in the opened state, and the fourth control valve 210 is in the closed state, the first heat storage apparatus 202 can be bypassed, and the heat generated by the heat generating element 201 can be directly transferred to the liquid heat exchange apparatus 101 by using the third pipe 2031, the fifth pipe 208, and the first pipe 102, to heat the battery pack.

The third control valve 209 is configured to control connection and disconnection of the fifth pipe 208, and the fourth control valve 210 is configured to control connection and disconnection of the pipe located in the first heat storage apparatus 202 in the second pipe 203. Both the third control valve 209 and the fourth control valve 210 are electric valves, and may be specifically electromagnetic valves, electro-hydraulic valves, another type of electric valve, or the like, which is not limited herein.

In this embodiment, the heating system 200 may further include the fifth pipe 208, and the fifth pipe 208 is the bypass pipe of the first heat storage apparatus 202. In this case, when the battery pack 103 needs to be heated, the first pipe 102 and the second pipe 203 are in the connected state, and when the first control valve 205 is in the opened state, the second control valve 206 is in the closed state, the third control valve 209 is in the opened state, and the fourth control valve 210 is in the closed state, the first heat storage apparatus 202 can be bypassed. That is, the heat generated by the at least one heat generating element 201 no longer flows through some pipes that are in the second pipe 203 and on which the first heat storage apparatus 202 is connected in series, but is transferred to the liquid heat exchange apparatus 101 by using the fifth pipe 208 and the first pipe 102, to heat the battery pack. In the foregoing manner, the heat may be stored in the first heat storage apparatus 202, and the battery pack 103 may be heated by releasing the heat by the first heat storage apparatus 202. Alternatively, the heat generated by the heat generating element 201 may be directly transferred to the liquid heat exchange apparatus 101, to heat the battery pack 103. When weather is relatively cold, the battery pack 103 may be heated during driving, thereby prolonging a battery life of the battery pack 103, expanding an application scenario of this solution, and improving comprehensiveness of this solution.

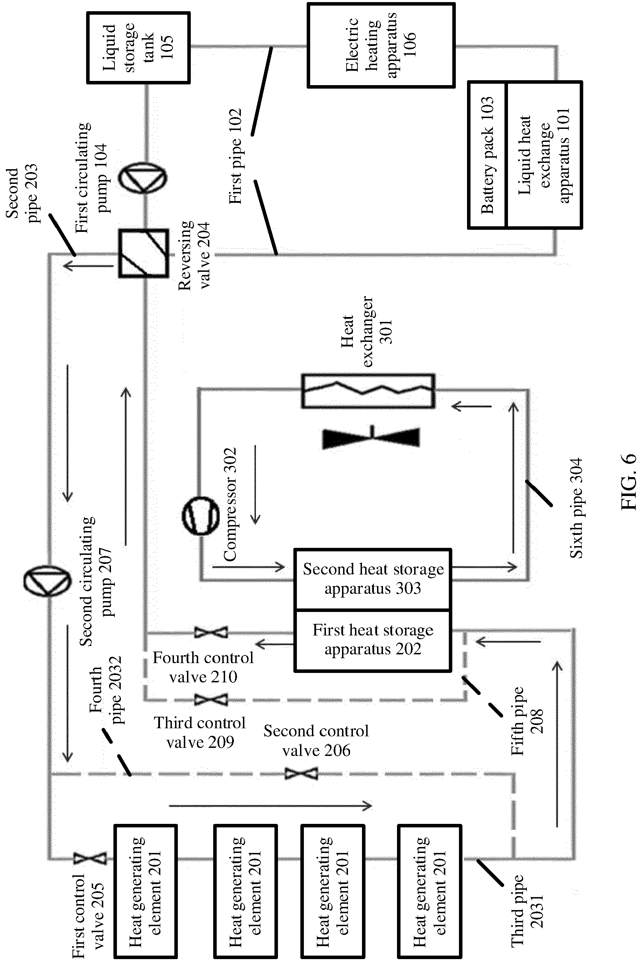

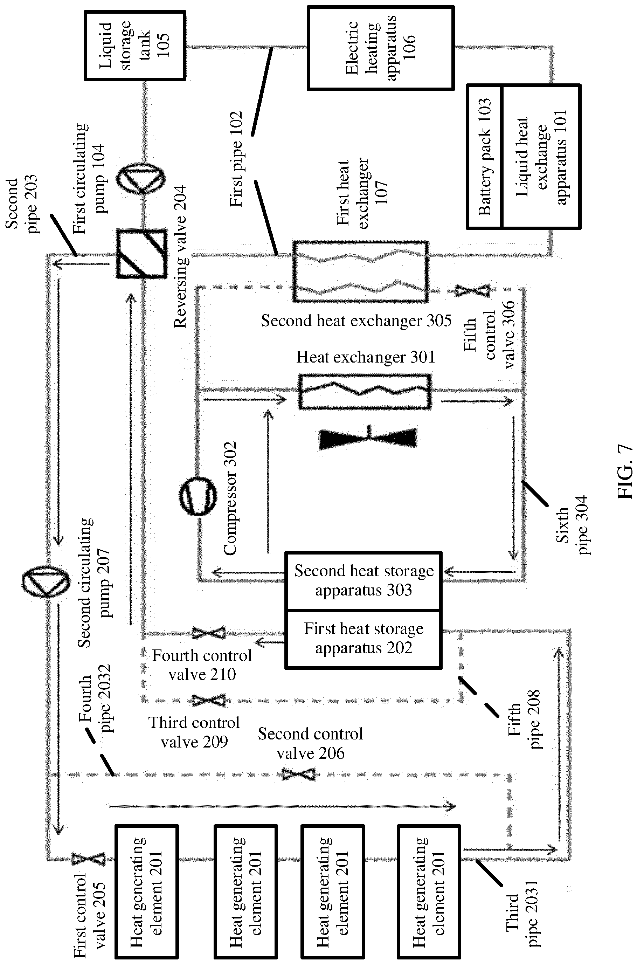

Optionally, FIG. 6 and FIG. 7 are two schematic diagrams of structures of the battery pack heating device according to this embodiment of this application. The battery pack heating device 10 may further include an air conditioning system 300. The air conditioning system 300 includes a heat exchanger 301, a compressor 302, a second heat storage apparatus 303, and a sixth pipe 304, and the sixth pipe 304 connects the heat exchanger 301, the compressor 302, and the second heat storage apparatus 303 in series. The second heat storage apparatus 303 is connected to the first heat storage apparatus 202. The second heat storage apparatus 303 and the first heat storage apparatus 202 may be connected in a fixed connection manner or a sliding connection manner.

In an implementation, when the second heat storage apparatus 303 and the first heat storage apparatus 202 are connected in the sliding connection manner, the second heat storage apparatus 303 and the first heat storage apparatus 202 may be controlled to switch between a connected state and an unconnected state.

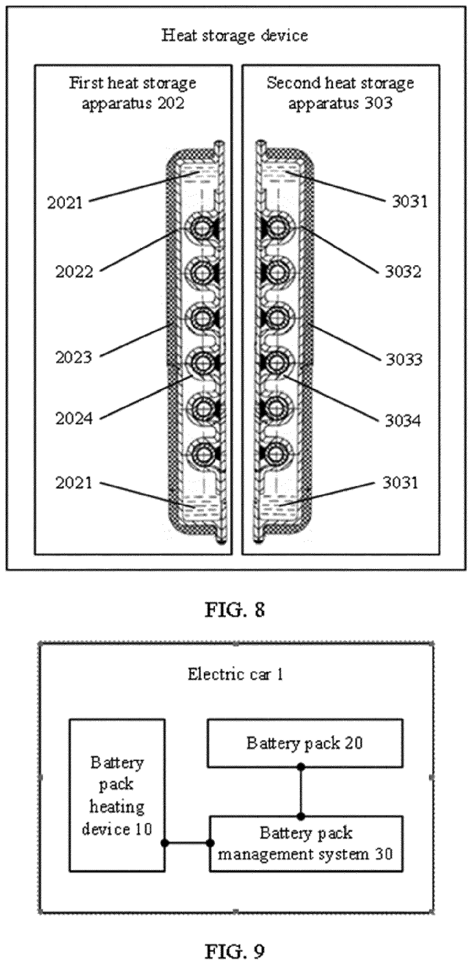

In another implementation, when the second heat storage apparatus 303 and the first heat storage apparatus 202 are connected in the fixed connection manner, because structures of the first heat storage apparatus 202 and the second heat storage apparatus 303 are similar, the following describes the structures of the first heat storage apparatus 202 and the second heat storage apparatus 303 in detail with reference to FIG. 8. FIG. 8 is a schematic diagram of structures of a heat storage apparatus according to an embodiment of this application. Specifically, referring to FIG. 8, the first heat storage apparatus 202 includes a first phase change material 2021, a housing 2022, and a pipe located in the first heat storage apparatus 202 among pipes included in the second pipe 203, and the first phase change material 2021 is located between the housing 2022 and the second pipe 203. The second heat storage apparatus 303 includes a second phase change material 3031, a housing 3032, and a pipe located in the second heat storage apparatus 303 among pipes included in the sixth pipe 304, and the second phase change material 3031 is located between the housing 3032 and the sixth pipe 304. The housing 2022 of the first heat storage apparatus 202 and the housing 3032 of the second heat storage apparatus 303 are fixedly connected, and may be specifically in a bolted connection, a riveted connection, a pinned connection, or the like. This is not limited herein. A material of the housing 3032 may be a material with a small coefficient of thermal conductivity, which can not only be used to surround the first phase change material 2021 to avoid a leakage of the first phase change material 2021, but also have a thermal insulation effect.

In this embodiment, because the first heat storage apparatus 202 is connected in series on the second pipe 203, some pipes of all pipes included in the second pipe 203 are located in the first heat storage apparatus 202, and the pipes located in the first heat storage apparatus 202 may be considered to be included in the first heat storage apparatus 202. Similar to the first heat storage apparatus 202, because the second heat storage apparatus 303 is connected in series on the sixth pipe 304, some pipes of all pipes included in the sixth pipe 304 are located in the second heat storage apparatus 303, and the pipes located in the second heat storage apparatus 303 may be considered to be included in the second heat storage apparatus 303.

In this embodiment, similar to the first phase change material 2021, the second phase change material 3031 may be a phase change material that performs a phase change between a solid state and a liquid state, or may be a phase change material that performs a phase change between solid states, or may be a phase change material that performs a phase change between a liquid state and a gaseous state, or the like. This should be specifically determined based on an actual product, and is not limited herein. Optionally, the second phase change material 3031 is a phase change material that performs a phase change between a solid state and liquid. When the heat exchanger 301 transfers generated heat to the second heat storage apparatus 303 by using the sixth pipe 304, the second phase change material 3031 changes from the solid state to the liquid, to store the heat. When the heat stored in the second heat storage apparatus 303 needs to be released and transferred to the first heat storage apparatus 202 to heat the battery pack in the battery pack system, the second phase change material 3031 changes from the liquid to the solid state, to release the heat. If a phase change material with a phase change between a liquid state and a gaseous state is selected, pressure in the heat storage apparatus may greatly increase when a phase change from the liquid state to the gaseous state occurs. In this solution, a phase change material with a phase change between the solid state and the liquid state is selected. Increased pressure caused by a phase change from the solid state to the liquid state is relatively small, thereby avoiding a danger such as a phase change or explosion of the heat storage apparatus caused by a pressure increase, and ensuring stability and safety of the heat storage apparatus.

Both the first phase change material 2021 and the second phase change material 3031 are phase change materials with a large energy storage density and a large coefficient of thermal conductivity. Because heat generated by the heat generating element 201 and heat generated the air conditioning system 300 during cooling differ greatly, the first phase change material 2021 and the second phase change material 3031 may use different materials. Specifically, a phase change temperature of the first phase change material 2021 may be 60 degrees Celsius to 80 degrees Celsius, and a critical temperature of the second phase change material 3031 may be 40 degrees Celsius to 50 degrees Celsius. Certainly, the second phase change material 3031 and the first phase change material 2021 may alternatively be a same phase change material. However, it should be understood that the first phase change material 2021 should be determined with reference to a plurality of factors such as a critical temperature, a coefficient of thermal conductivity, and a volumetric energy density of the first phase change material 2021 in an actual product.

In this embodiment, a thermally conductive medium is disposed between the first heat storage apparatus 202 and the second heat storage apparatus 303, and the thermally conductive medium may be thermally conductive adhesive, a thermally conductive pad, thermally conductive paste, or another type of flexible thermally conductive material. In this way, a gap between the first heat storage apparatus 202 and the second heat storage apparatus 303 is filled, to help improve a heat conduction speed between the first heat storage apparatus 202 and the second heat storage apparatus 303, thereby improving a speed of a heating process.

Optionally, referring to FIG. 8, the housing of the first heat storage apparatus 202 is further wrapped in a first thermal insulation material 2023, and the housing of the second heat storage apparatus 303 is further wrapped in a second thermal insulation material 3033. As an example, the first thermal insulation material 2023 and the second thermal insulation material 3033 may be glass wool products, fire-resistant and fiber-filled thermal insulation blankets, thermal insulation foam glass, polyurethane, or the like. The housing of the first heat storage apparatus 202 and the housing of the second heat storage apparatus 303 are wrapped in the thermal insulation materials, to further prevent heat exchange between the phase change materials in the heat storage apparatuses and the outside, thereby improving heat storage performance of the first heat storage apparatus 202 and the second heat storage apparatus 303.

Optionally, further referring to FIG. 8, the pipe located in the first heat storage apparatus 202 among the pipes included in the second pipe 203 is covered with a first fixing apparatus 2024, the pipe located in the second heat storage apparatus 303 among the pipes included in the sixth pipe 304 is covered with a second fixing apparatus 3034, and both the first fixing apparatus 2024 and the second fixing apparatus 3034 are thermally conductive metal media.

In this embodiment, both the first fixing apparatus 2024 and the second fixing apparatus 3034 are hard and thermally conductive media. Specifically, materials of both the first fixing apparatus 2024 and the second fixing apparatus 3034 may be aluminum, copper, silver, iron, or other thermally conductive media having a fixing function. More specifically, the materials of the first fixing apparatus 2024 and the second fixing apparatus 3034 may be the same or different. The materials of the first fixing apparatus 2024 and the second fixing apparatus 3034 may be flexibly determined with reference to an actual situation, and are not limited herein.

In this embodiment, the first fixing apparatus 2024 and the second fixing apparatus 3034 may be respectively fixedly connected to the housing of the first heat storage apparatus 202 and the housing of the second heat storage apparatus 303. The fixed connection may be specifically a welded connection, an adhesive connection, a bolted connection, or the like. This is not specifically limited herein. Because both the first fixing apparatus 2024 and the second fixing apparatus 3034 are thermally conductive media, the first fixing apparatus 2024 and the second fixing apparatus 3034 not only can fix the pipes in the first heat storage apparatus 202 and the second heat storage apparatus 303, but also provide good heat conduction for heat exchange between the pipes and the phase change materials.

In this embodiment, further referring to FIG. 6 and FIG. 7, the air conditioning system 300 may implement cooling and heating by using the heat exchanger 301, the compressor 302, the second heat storage apparatus 303, and the sixth pipe 304. Specifically, when the air conditioning system 300 is in a cooling state, referring to FIG. 6, the compressor 302 compresses refrigerant into high-pressure gas, which flows through the sixth pipe 304 to the second heat storage apparatus 303. The refrigerant changes from the gas to liquid to release a large amount of heat, and the released heat is absorbed by the second heat storage apparatus 303. When entering the heat exchanger 301, the high-pressure liquid refrigerant changes from the liquid to gas to absorb heat. In this case, the heat exchanger 301 becomes cold, and a fan blows out cold air at the heat exchanger 301, thereby implementing cooling. It should be understood that when the air conditioning system 300 is in the cooling state, a function of the heat exchanger 301 is equivalent to an evaporator. When the air conditioning system 300 is in a heating state, referring to FIG. 7, the compressor 302 compresses the refrigerant into the high-pressure gas, which flows through the sixth pipe 304 to the heat exchanger 301. The refrigerant changes from the gas to liquid to release a large amount of heat. In this case, the heat exchanger 301 becomes hot, and the fan blows out hot air at the heat exchanger 301, thereby implementing heating. The liquid refrigerant flows through the sixth pipe 304 to the second heat storage apparatus 303 to absorb the heat stored in the second heat storage apparatus 303, and changes from the liquid to gas to absorb the heat. It should be understood that when the air conditioning system 300 is in the heating state, a function of the heat exchanger 301 is equivalent to a condenser.

When the battery pack 103 does not need to be heated, the first pipe 102 and the second pipe 203 are in the disconnected state. When the air conditioning system 300 is in the cooling state, the compressor 302 may be used to transfer heat absorbed by the heat exchanger 301 during working to the second heat storage apparatus 303 by using the sixth pipe 304, to store the heat. Specifically, referring to FIG. 6, when refrigerant with a relatively high temperature in the sixth pipe 304 flows to the second heat storage apparatus 303, the second phase change material 3031 in the second heat storage apparatus 303 may perform a phase change to absorb and store heat. When the battery pack 103 needs to be heated, the first pipe 102 and the second pipe 203 are in the connected state, and when the air conditioning system 300 is not in the heating state, that is, when the air conditioning system 300 is in the cooling state, or when the air conditioning system 300 is in a non-working state, the air conditioning system 300 does not consume heat in the second heat storage apparatus 303. Therefore, when heat in the first heat storage apparatus 202 needs to be released to heat the battery pack 103, the second heat storage apparatus 303 releases heat, and the released heat is transferred to the first heat storage apparatus 202 in a heat conduction manner, to heat liquid flowing in the second pipe 203, so that the heat is transferred to the liquid heat exchange apparatus 101 by using the second pipe 203 and the first pipe 102, to heat the battery pack 103.

In this embodiment, the battery pack heating device 10 may further include the air conditioning system 300, the air conditioning system 300 includes the second heat storage apparatus 303, and the second heat storage apparatus 303 is fixedly connected to the first heat storage apparatus 202, so that heat generated during cooling of the air conditioning system 300 can be stored to heat the battery pack 103, and waste heat generated by the air conditioning system 300 is reused. In a region with a large temperature difference between day and night, a cooling time of the air conditioning system 300 is long during the day. Therefore, a large amount of waste heat is generated. In the foregoing manner, an application scenario of this solution is broadened, and environmental protection performance of this solution is further improved.

Optionally, in an implementation, the first pipe 102 and the second pipe 203 are fixedly connected. When the air conditioning system 300 is in the heating state, referring to FIG. 7, the first heat storage apparatus 202 transfers the released heat to the second heat storage apparatus 303 in a heat conduction manner, so that heat released by the first heat storage apparatus 202 and the second heat storage apparatus 303 is transferred to the heat exchanger 301 by using the compressor 302. Specifically, when refrigerant with a relatively low temperature in the sixth pipe 304 flows to the second heat storage apparatus 303, the second phase change material 3031 in the second heat storage apparatus 303 may perform a phase change, and the first phase change material 2021 in the first heat storage apparatus 202 may perform a phase change to transfer heat to the second heat storage apparatus 303, to heat the refrigerant in the sixth pipe 304. In this way, waste heat generated by the heat generating element 201 may be further used to heat the air conditioning system 300, thereby broadening an application scenario of this solution, and increasing implementation flexibility of this solution.

Further, further referring to FIG. 7, the battery pack system 100 may further include a first heat exchanger 107, and the air conditioning system 300 further includes a second heat exchanger 305 and a fifth control valve 306. The fifth control valve 306 is connected in series to the second heat exchanger 305, and is configured to control connection and disconnection of a pipe on which the second heat exchanger 305 is located. The first heat exchanger 107 is configured to transfer heat generated by the battery pack 103 during working to the air conditioning system 300, thereby reducing damage caused by a high temperature to the battery pack 103. When the air conditioning system 300 is in the heating state, the fifth control valve 306 is closed. When the first pipe 102 and the second pipe 203 are in the disconnected state, the battery pack 103 does not need to be heated. Therefore, the battery pack 103 is prevented from being damaged by a high temperature.

In another implementation, when the second heat storage apparatus 303 and the first heat storage apparatus 202 are connected in the sliding connection manner, and the air conditioning system 300 is in the heating state, the second heat storage apparatus 303 and the first heat storage apparatus 202 may be controlled to be in the unconnected state, to avoid consumption of the heat stored in the first heat storage apparatus 202 due to heating of the air conditioning system 300, thereby ensuring that there is plenty of heat in the first heat storage apparatus 202 to heat the battery pack 103.

Based on the foregoing embodiments described in FIG. 1 to FIG. 8, an embodiment of this application further provides a heat storage apparatus. The heat storage device includes a first heat storage apparatus 202, and the first heat storage apparatus 202 is applied to a heating system 200 in a battery pack heating device 10. The battery pack heating device 10 further includes a battery pack system 100, the heating system 200 further includes at least one heat generating element 201, and the first heat storage apparatus 202 is connected in series to the at least one heat generating element 201 by using a pipe. The first heat storage apparatus 202 includes a first phase change material 2021, a housing 2022, and a pipe located in the first heat storage apparatus 202. The pipe in the first heat storage apparatus 202 is connected to the pipe used to connect in series to the at least one heat generating element 201, and the first phase change material 2021 is located between the housing 2022 of the first heat storage apparatus 202 and the pipe in the first heat storage apparatus 202.

When the at least one heat generating element 201 transfers generated heat to the first heat storage apparatus 202 by using the pipe, the first phase change material 2021 changes from a solid state to liquid, to store the heat. When a battery pack 103 in the battery pack system 100 is heated, the first phase change material 2021 changes from the liquid to the solid state to release the heat, and the released heat is used to heat the battery pack 103.

In this embodiment, the first heat storage apparatus 202 included in the heat storage device is applied to the heating system 200 in the battery pack heating device 10. The battery pack heating device 10 further includes the battery pack system 100, and the heating system 200 further includes the at least one heat generating element 201. The heat generated by the at least one heat generating element 201 can be transferred to the first heat storage apparatus 202 by using the pipe, and can be stored in the first heat storage apparatus 202. When the battery pack 103 in the battery pack system 100 needs to be heated, the first heat storage apparatus 202 releases the stored heat to heat the battery pack 103. In the foregoing manner, the heat generated by the heat generating element 201 can be stored in the first heat storage apparatus 202, and the heat stored in the first heat storage apparatus 202 can be used to heat the battery pack 103. That is, waste heat generated by another heat generating element 201 is used to heat the battery pack 103, thereby providing an environment-friendly and energy-saving battery pack heating solution.

In a possible implementation, the heat storage device further includes a second heat storage apparatus 303, and the second heat storage apparatus 303 is applied to an air conditioning system 300 of the battery pack heating device 10. The second heat storage apparatus 303 includes a second phase change material 3031, a housing, and a pipe located in the second heat storage apparatus 303, the pipe in the second heat storage apparatus 303 is connected to a pipe in the air conditioning system 300, and the second phase change material 3031 is located between the housing 3032 of the second heat storage apparatus 303 and the pipe in the second heat storage apparatus 303. The second heat storage apparatus 303 is connected to the first heat storage apparatus 202.

When the air conditioning system 300 is in a cooling state, heat absorbed by the air conditioning system 300 during working is transferred to the second heat storage apparatus by using the pipe in the air conditioning system 300, and the second phase change material 3031 changes from the solid state to liquid, to store the heat. When the battery pack 103 in the battery pack system 100 is heated, the second phase change material 3031 changes from the liquid to the solid state to release the heat, and the released heat is transferred to the first heat storage apparatus 202 in a heat conduction manner.

In a possible implementation, a critical temperature of the first phase change material 2021 is 60 degrees Celsius to 80 degrees Celsius, and a critical temperature of the second phase change material 3031 is 40 degrees Celsius to 50 degrees Celsius.

In a possible implementation, a thermally conductive medium is disposed between the first heat storage apparatus 202 and the second heat storage apparatus 303.

In a possible implementation, the housing 2022 of the first heat storage apparatus 202 and the housing 3032 of the second heat storage apparatus 303 are further wrapped in thermal insulation materials.

In a possible implementation, the pipe in the first heat storage apparatus is covered with a first fixing apparatus 2024, the pipe in the second heat storage apparatus is covered with a second fixing apparatus 3034, and both the first fixing apparatus 2024 and the second fixing apparatus 3034 are thermally conductive media.

For specific implementations and beneficial effects of components in the heat storage apparatus provided in this embodiment of this application, refer to specific descriptions in the embodiments corresponding to FIG. 1 to FIG. 8. Details are not described herein.

Based on the foregoing embodiments described in FIG. 1 to FIG. 8, an embodiment of this application further provides an electric car 1. FIG. 9 is a schematic diagram of a structure of an electric car according to an embodiment of this application. The electric car 1 may include a battery pack heating device 10, a battery pack 20, and a battery pack management system 30. The battery pack management system 30 is connected to the battery pack heating device 10 and the battery pack 20. The battery pack management system 30 is configured to collect information about the battery pack 20, and is further configured to send instructions to an element in the battery pack heating device 10 based on the collected information, to control the battery pack heating device 10 to heat the battery pack 20. Specifically, the battery pack management system 30 may include at least a processor. Optionally, the battery pack management system 30 may further include a sensor. The sensor may be installed on the battery pack 20, and the processor in the battery pack management system 30 may collect information by using the sensor, to obtain the information about the battery pack 20. Certainly, the battery pack management system 30 may further include another element, which is not limited herein. More specifically, the information about the battery pack 20 includes at least temperature information of the battery pack 20. The battery pack management system 30 and the battery pack heating device 10 may be electrically connected by using a signal cable or a power supply cable, and the battery pack management system 30 and the battery pack 20 may be electrically connected by using a signal cable.

The battery pack heating device 10 includes a battery pack system 100 and a heating system 200. The battery pack system 100 includes at least a liquid heat exchange apparatus 101 and a first pipe 102, where the liquid heat exchange apparatus 101 is connected in series on the first pipe 102, and the liquid heat exchange apparatus 101 is configured to heat a battery pack 103. The heating system 200 includes at least one heat generating element 201, a first heat storage apparatus 202, a second pipe 203, and a reversing valve 204, where the at least one heat generating element 201 and the first heat storage apparatus 202 are connected by using the second pipe 203. The reversing valve 204 is disposed between the first pipe 102 and the second pipe 203, and the reversing valve 204 is configured to control connection and disconnection between the first pipe 102 and the second pipe 203.

When the battery pack management system 30 determines, based on the collected information, that the battery pack 103 does not need to be heated, the battery pack management system 30 is configured to send a disconnection signal to the reversing valve 204, and the reversing valve 204 performs a rotation operation based on the disconnection signal to enable the first pipe 102 and the second pipe 203 to be in a disconnected state. Heat generated by the at least one heat generating element 201 is transferred to the first heat storage apparatus 202 by using the second pipe 203, and is stored by using the first heat storage apparatus 202. When the battery pack management system 30 determines, based on the collected information, that the battery pack 103 needs to be heated, the battery pack management system 30 is configured to send a connection signal to the reversing valve 204, and the reversing valve 204 performs a rotation operation based on the connection signal to enable the first pipe 102 and the second pipe 203 to be in a connected state. Heat released by the first heat storage apparatus 202 is transferred to the liquid heat exchange apparatus 101 by using the first pipe 102 and the second pipe 203, to heat the battery pack 103.

In a possible implementation, the heating system 200 further includes a first control valve 205 and a second control valve 206, the second pipe 203 includes a third pipe 2031 and a fourth pipe 2032, and the fourth pipe 2032 is a bypass pipe of the third pipe 2031. The at least one heat generating element 201 and the first control valve 205 are connected in series on the third pipe 2031. The second control valve 206 is connected in series on the fourth pipe 2032.

When the battery pack management system 30 determines, based on the collected information, that the battery pack 103 does not need to be heated, the battery pack management system 30 is configured to send a disconnection signal to the reversing valve 204, and the reversing valve 204 performs a rotation operation based on the disconnection signal to enable the first pipe 102 and the second pipe 203 to be in the disconnected state. The battery pack management system 30 is further configured to send an opening signal to the first control valve 205 and send a closing signal to the second control valve 206, so that the first control valve 205 is in an opened state, and the second control valve 206 is in a closed state. The at least one heat generating element 201 is connected to the first heat storage apparatus 202, and the heat generated by the at least one heat generating element 201 is transferred to the first heat storage apparatus 202 by using the second pipe 203, and is stored by using the first heat storage apparatus 202. When the battery pack management system 30 determines, based on the collected information, that the battery pack 103 needs to be heated, the battery pack management system 30 is configured to send a connection signal to the reversing valve 204, and the reversing valve 204 performs a rotation operation based on the connection signal to enable the first pipe 102 and the second pipe 203 to be in the connected state. The battery pack management system 30 is further configured to send a closing signal to the first control valve 205 and send an opening signal to the second control valve 206, so that the first control valve 205 is in the closed state, and the second control valve 206 is in the opened state. The at least one heat generating element 201 is bypassed, and the heat released by the first heat storage apparatus 202 is transferred to the liquid heat exchange apparatus 101 by using the first pipe 102 and the second pipe 203, to heat the battery pack 103.

In a possible implementation, the first heat storage apparatus 202 includes a first phase change material 2021, a housing 2022, and a pipe located in the first heat storage apparatus 202 among pipes included in the second pipe 203, and the first phase change material 2021 is located between the housing 2022 of the first heat storage apparatus 202 and the second pipe 203.

When the at least one heat generating element 201 transfers the generated heat to the first heat storage apparatus 202 by using the second pipe 203, the first phase change material 2021 changes from a solid state to liquid, to store the heat. When the battery pack in the battery pack system 100 is heated, the first phase change material 2021 changes from the liquid to the solid state to release the heat, and the released heat is transferred to the liquid heat exchange apparatus 101 by using the second pipe 203 and the first pipe 102, to heat the battery pack 103.

In a possible implementation, the battery pack heating device further includes an air conditioning system 300. The air conditioning system 300 includes a heat exchanger 301, a compressor 302, a second heat storage apparatus 303, and a sixth pipe 304, and the sixth pipe 304 connects the heat exchanger 301, the compressor 302, and the second heat storage apparatus 303 in series. The second heat storage apparatus 303 includes a second phase change material, a housing 3032, and a pipe located in the second heat storage apparatus 303 among pipes included in the sixth pipe 304, and the second phase change material is located between the housing of the second heat storage apparatus 303 and the sixth pipe 304. The second heat storage apparatus 303 is connected to the first heat storage apparatus 202.

When the battery pack management system 30 determines that the battery pack 103 does not need to be heated, the first pipe 102 and the second pipe 203 are in the disconnected state. If the air conditioning system 300 is in a cooling state, the compressor 302 is used to transfer heat absorbed by the heat exchanger 301 during working to the second heat storage apparatus 303 by using the pipe in the air conditioning system 300, and the second phase change material changes from the solid state to liquid, to store the heat. When the battery pack management system 30 determines that the battery pack 103 needs to be heated, the first pipe 102 and the second pipe 203 are in the connected state, the second phase change material changes from the liquid to the solid state to release the heat, and the released heat is transferred to the first heat storage apparatus 202 in a heat conduction manner.

In a possible implementation, a critical temperature of the first phase change material 2021 is 60 degrees Celsius to 80 degrees Celsius, and a critical temperature of the second phase change material is 40 degrees Celsius to 50 degrees Celsius.

In a possible implementation, the housing 2022 of the first heat storage apparatus 202 and the housing of the second heat storage apparatus 303 are further wrapped in thermal insulation materials.

In a possible implementation, the pipe located in the first heat storage apparatus 202 among the pipes included in the second pipe 203 is covered with a first fixing apparatus 2023, the pipe located in the second heat storage apparatus 303 among the pipes included in the sixth pipe 304 is covered with a second fixing apparatus 3033, and both the first fixing apparatus 2023 and the second fixing apparatus 3033 are thermally conductive media.

In a possible implementation, when the air conditioning system 300 is in a heating state, the first heat storage apparatus 202 transfers the released heat to the second heat storage apparatus 303 in a heat conduction manner, so that heat released by the first heat storage apparatus 202 and the second heat storage apparatus 303 is transferred to the heat exchanger 301 by using the compressor 302.

In a possible implementation, the heating system 200 further includes a fifth pipe 208, a third control valve 209, and a fourth control valve 210. The fifth pipe 208 is a bypass pipe of the first heat storage apparatus 202, and the third control valve 209 is connected in series on the fifth pipe 208. The fourth control valve 210 is connected in series to the first heat storage apparatus 202.

When the first pipe 102 and the second pipe 203 are in the connected state, the battery pack management system 30 is configured to send an opening signal to the first control valve 205 and the third control valve 209 and send a closing signal to the second control valve 206 and the fourth control valve 210, so that the first control valve 205 is in the opened state, the second control valve 206 is in the closed state, the third control valve 209 is in the opened state, and the fourth control valve 210 is in the closed state. In this case, the first heat storage apparatus 202 can be bypassed, and the heat generated by the at least one heat generating element 201 can be directly transferred to the liquid heat exchange apparatus 101 by using the third pipe 2031, the fifth pipe 208, and the first pipe 102, to heat the battery pack 103.

In a possible implementation, the battery pack system 100 further includes an electric heating apparatus 106, and the electric heating apparatus 106 and the liquid heat exchange apparatus 101 are connected in series by using the first pipe 102.

When the first pipe 102 and the second pipe 203 are in the connected state, the battery pack management system 30 is configured to obtain a temperature of the battery pack 103. When the battery pack management system 30 determines that the temperature of the battery pack 103 is higher than a preset threshold, the battery pack management system 30 is further configured to power off the electric heating apparatus 106, so that the electric heating apparatus 106 is in a turned-off state, and the battery pack 103 is heated by using the heat released by the first heat storage apparatus 202. When the battery pack management system 30 determines that the temperature of the battery pack 103 is lower than the preset threshold, the battery pack management system 30 is further configured to control the electric heating apparatus 106 to be powered on, so that the electric heating apparatus 106 is in a turned-on state, and the battery pack 103 is heated by using the heat released by the first heat storage apparatus 202 and heat released by the electric heating apparatus 106.

For specific implementations and beneficial effects of components in the battery pack heating device 10 included in the electric car 1 provided in this embodiment of this application, refer to specific descriptions in the embodiments corresponding to FIG. 1 to FIG. 8. Details are not described herein.

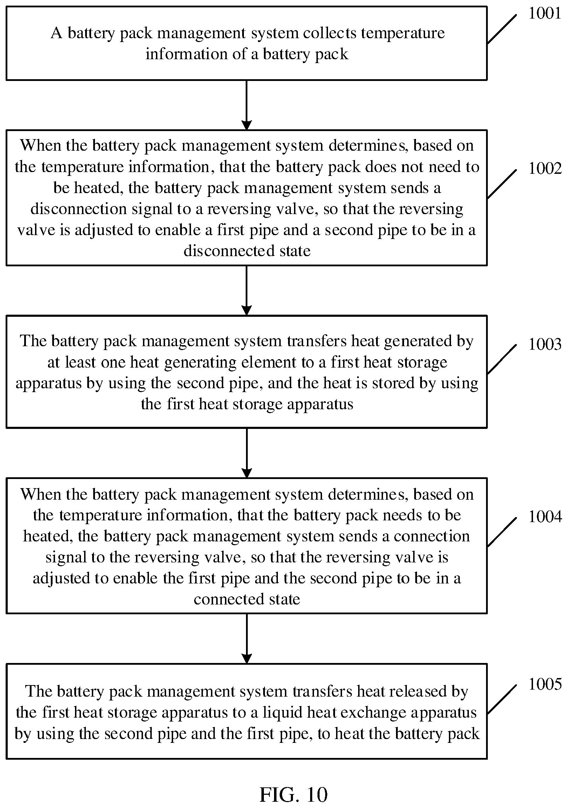

The foregoing embodiments shown in FIG. 1 to FIG. 9 are detailed descriptions of specific structures of the battery pack heating device 10, the heat storage device, and the electric car 1. Based on the foregoing embodiments described in FIG. 1 to FIG. 9, the following describes a heating method of a battery pack 103 in detail with reference to an embodiment shown in FIG. 10. The heating method is applied to a battery pack management system 30, and the battery pack management system 30 is included in an electric car 1 and is configured to control a battery pack heating device 10 to heat the battery pack 103. The battery pack heating device 10 includes a battery pack system 100 and a heating system 200. The battery pack system 100 includes at least a liquid heat exchange apparatus 101 and a first pipe 102, and the liquid heat exchange apparatus 101 is connected in series on the first pipe 102. The heating system 200 includes at least one heat generating element 201, a first heat storage apparatus 202, and a second pipe 203, where the at least one heat generating element 201 and the first heat storage apparatus 202 are connected by using the second pipe 203. A reversing valve 204 is disposed between the first pipe 102 and the second pipe 203. FIG. 10 is a schematic flowchart of a heating method according to an embodiment of this application. The heating method provided in this embodiment of this application may include the following steps:
1001. The battery pack management system 30 collects temperature information of the battery pack 103.
1002. When the battery pack management system 30 determines, based on the temperature information, that the battery pack 103 does not need to be heated, the battery pack management system 30 sends a disconnection signal to the reversing valve 204, so that the reversing valve 204 is adjusted to enable the first pipe 102 and the second pipe 203 to be in a disconnected state.
1003. The battery pack management system 30 transfers heat generated by the at least one heat generating element 201 to the first heat storage apparatus 202 by using the second pipe 203, and the heat is stored by using the first heat storage apparatus 202.

In this embodiment, if the heating system 200 includes a second circulating pump 207, the battery pack management system 30 opens the second circulating pump 207 to promote flowing of liquid in the second pipe 203, to transfer the heat generated by at least one heat generating element 201 to the first heat storage apparatus 202 by using the second pipe 203, so that the heat is stored by using the first heat storage apparatus 202.

1004. When the battery pack management system 30 determines, based on the temperature information, that the battery pack 103 needs to be heated, the battery pack management system 30 sends a connection signal to the reversing valve 204, so that the reversing valve 204 is adjusted to enable the first pipe 102 and the second pipe 203 to be in a connected state.

1005. The battery pack management system 30 transfers heat released by the first heat storage apparatus 202 to the liquid heat exchange apparatus 101 by using the second pipe 203 and the first pipe 102, to heat the battery pack 103.

In this embodiment, if the heating system includes the second circulating pump 207, and the battery pack system includes a first circulating pump 104, the battery pack management system opens the second circulating pump 207 and/or the first circulating pump 104 to promote flowing of liquid in the first pipe 102 and the second pipe 203, to transfer the heat released by the first heat storage apparatus 202 to the liquid heat exchange apparatus 101 by using the first pipe 102 and the second pipe 203, to heat the battery pack 103.

In this embodiment, the battery pack heating device 10 includes the battery pack system 100 and the heating system 200. The battery pack system 100 includes at least the liquid heat exchange apparatus 101 and the first pipe 102, where the liquid heat exchange apparatus 101 is connected in series on the first pipe 102, and is configured to heat the battery pack 103. The heating system 200 includes the at least one heat generating element 201, the first heat storage apparatus 202, and the second pipe 203, where the at least one heat generating element 201 and the first heat storage apparatus 202 are connected by using the second pipe 203. Because the reversing valve 204 is disposed between the first pipe 102 and the second pipe 203, when the battery pack management system controls the first pipe 102 and the second pipe 203 to be in the disconnected state, the heat generated by the heat generating element can be transferred to the first heat storage apparatus 202 by using the second pipe 203, and can be stored by using the first heat storage apparatus 202. When the battery pack management system controls the first pipe 102 and the second pipe 203 to be in the connected state, the heat stored in the first heat storage apparatus 202 can be released and transferred to the liquid heat exchange apparatus 101 by using the first pipe 102 and the second pipe 203, to heat the battery pack 103. In the foregoing manner, the heat generated by the heat generating element 201 can be stored in the first heat storage apparatus 202, and the battery pack can be heated by using the heat stored in the first heat storage apparatus 202. That is, waste heat generated by another heat generating element 201 is used to heat the battery pack, thereby providing an environment-friendly and energy-saving battery pack heating solution.

In a possible implementation, the heating system 200 further includes a first control valve 205 and a second control valve 206, and the second pipe 203 includes a third pipe 2031 and a fourth pipe 2032. The at least one heat generating element 201 and the first control valve 205 are connected in series on the third pipe 2031. The fourth pipe 2032 is a bypass pipe of the third pipe 2031, and the second control valve 206 is connected in series on the fourth pipe 2032.

That the battery pack management system 30 transfers heat generated by the at least one heat generating element 201 to the first heat storage apparatus 202 by using the second pipe 203 includes: The battery pack management system 30 opens the first control valve 205 and closes the second control valve 206, to transfer the heat generated by the at least one heat generating element 201 to the first heat storage apparatus 202 by using the second pipe 203.

That the battery pack management system 30 transfers heat released by the first heat storage apparatus 202 to the liquid heat exchange apparatus 101 by using the second pipe 203 and the first pipe 102 includes: The battery pack management system 30 closes the first control valve 205 and opens the second control valve 206, to bypass the at least one heat generating element 201 and transfer the heat released by the first heat storage apparatus 202 to the liquid heat exchange apparatus 101 by using the fourth pipe 2032 and the first pipe 102.

In a possible implementation, the heating system 200 further includes a fifth pipe 208, a third control valve 209, and a fourth control valve 210. The fifth pipe 208 is a bypass pipe of the first heat storage apparatus 202, and the third control valve 209 is connected in series on the fifth pipe 208. The fourth control valve 210 is connected in series to the first heat storage apparatus 202.

After the battery pack management system 30 controls the reversing valve 204 to rotate to connect the first pipe 102 and the second pipe 203, the method further includes: The battery pack management system 30 opens the first control valve 205, closes the second control valve 206, opens the third control valve 209, and closes the fourth control valve 210, to bypass the first heat storage apparatus 202. The battery pack management system 30 transfers the heat generated by the at least one heat generating element 201 to the liquid heat exchange apparatus 101 by using the third pipe 2031, the fifth pipe 208, and the first pipe 102, to heat the battery pack.

In a possible implementation, the battery pack system further includes an electric heating apparatus 106, and the electric heating apparatus 106 and the liquid heat exchange apparatus are connected in series by using the first pipe 102. The method further includes:
When the battery pack management system 30 determines, based on the temperature information, that the battery pack needs to be heated, if a temperature of the battery pack 103 is higher than a preset threshold, the electric heating apparatus 106 is turned off. When the battery pack management system 30 determines, based on the temperature information, that the battery pack needs to be heated, if the temperature of the battery pack 103 is lower than the preset threshold, the electric heating apparatus 106 is turned on.

A person skilled in the art may clearly understand that, for convenience and simplicity of description, shapes, quantities, positions, and specific implementations of implementation processes of electronic components included in the electric car 1 described above are not described herein. For details, refer to corresponding descriptions in the structure embodiments described in FIG. 1 to FIG. 9.

In the several embodiments provided in this application, it should be understood that the disclosed system, apparatus, and method may be implemented in other manners. For example, the described apparatus embodiment is merely an example. For example, unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

## Claims

1. A battery pack heating device, wherein the battery pack heating device comprises a battery pack system and a heating system;
the battery pack system comprises at least a liquid heat exchange apparatus (101) and a first pipe (102), wherein the liquid heat exchange apparatus (101) is connected in series on the first pipe (102), and the liquid heat exchange apparatus (101) is configured to heat a battery pack (103);
the heating system comprises at least one heat generating element (201), a first heat storage apparatus (202), a second pipe (203), and a reversing valve (204), wherein the at least one heat generating element (201) and the first heat storage apparatus (202) are connected by using the second pipe (203);
the reversing valve (204) is disposed between the first pipe (102) and the second pipe (203), and the reversing valve (204) is configured to control connection and disconnection between the first pipe (102) and the second pipe (203);
when the first pipe (102) and the second pipe (203) are in a disconnected state, heat generated by the at least one heat generating element (201) is transferred to the first heat storage apparatus (202) by using the second pipe (203), and is stored by using the first heat storage apparatus (202); and
when the first pipe (102) and the second pipe (203) are in a connected state, heat released by the first heat storage apparatus (202) is transferred to the liquid heat exchange apparatus (101) by using the first pipe (102) and the second pipe (203), to heat the battery pack (103),
wherein the first heat storage apparatus (202) comprises a first phase change material, a housing, and a pipe located in the first heat storage apparatus (202) among pipes comprised in the second pipe (203), and the first phase change material is located between the housing of the first heat storage apparatus (202) and the second pipe (203);
when the at least one heat generating element (201) transfers the generated heat to the first heat storage apparatus (202) by using the second pipe (203), the first phase change material changes from a solid state to liquid; and
when the battery pack (103) in the battery pack system is heated, the first phase change material changes from the liquid to the solid state,
wherein the battery pack heating device further comprises an air conditioning system; the air conditioning system comprises a heat exchanger (301), a second heat storage apparatus (303), and a sixth pipe (304), and the sixth pipe (304) connects the heat exchanger (301) and the second heat storage apparatus in series; the second heat storage apparatus (303) comprises a second phase change material, a housing, and a pipe located in the second heat storage apparatus (303) among pipes comprised in the sixth pipe (304), and the second phase change material is located between the housing of the second heat storage apparatus (303) and the sixth pipe (304);
the second heat storage apparatus (303) is connected to the first heat storage apparatus (202);
when the first pipe (102) and the second pipe (203) are in the disconnected state, and the air conditioning system is in a cooling state, heat absorbed by the heat exchanger (301) during working is transferred to the second heat storage apparatus (303) by using the pipe in the air conditioning system, and the second phase change material changes from the solid state to liquid; and
when the battery pack (103) is heated by using the first heat storage apparatus (202), the second phase change material changes from the liquid to the solid state.

2. The device according to claim 1, wherein the heating system further comprises a first control valve (205) and a second control valve (206), the second pipe (203) comprises a third pipe (2031) and a fourth pipe (2032), and the fourth pipe (2032) is a bypass pipe of the third pipe (2031);
the at least one heat generating element (201) and the first control valve (205) are connected in series on the third pipe (2031);
the second control valve (206) is connected in series on the fourth pipe (2032);
when the first pipe (102) and the second pipe (203) are in the disconnected state, the first control valve (205) is in an opened state, and the second control valve (206) is in a closed state, the at least one heat generating element (201) is connected to the first heat storage apparatus (202), and the heat generated by the at least one heat generating element (201) is transferred to the first heat storage apparatus (202) by using the second pipe (203), and is stored by using the first heat storage apparatus (202); and
when the first pipe (102) and the second pipe (203) are in the connected state, the first control valve (205) is in the closed state, and the second control valve (206) is in the opened state, the at least one heat generating element (201) is bypassed, and the heat released by the first heat storage apparatus (202) is transferred to the liquid heat exchange apparatus (101) by using the first pipe (102) and the fourth pipe, to heat the battery pack (103).

3. The device according to claim 2, wherein the heating system further comprises a fifth pipe (208), a third control valve (209), and a fourth control valve (210);
the fifth pipe (208) is a bypass pipe of the first heat storage apparatus (202), and the third control valve (209) is connected in series on the fifth pipe (208);
the fourth control valve (210) is connected in series to the first heat storage apparatus (202); and
when the first pipe (102) and the second pipe (203) are in the connected state, the first control valve (205) is in the opened state, the second control valve (206) is in the closed state, the third control valve (209) is in the opened state, and the fourth control valve (210) is in the closed state, the first heat storage apparatus (202) is bypassed, and the heat generated by the at least one heat generating element (201) is transferred to the liquid heat exchange apparatus (101) by using the third pipe (2031), the fifth pipe, and the first pipe (102), to heat the battery pack (103).

4. The device according to any one of claims 1-3, wherein a critical temperature of the first phase change material is 60 degrees Celsius to 80 degrees Celsius, and a critical temperature of the second phase change material is 40 degrees Celsius to 50 degrees Celsius.

5. The device according to any one of claims 1-3, wherein the housing of the first heat storage apparatus (202) and the housing of the second heat storage apparatus (303) are further wrapped in thermal insulation materials.

6. The device according to any one of claims 1-3, wherein the pipe located in the first heat storage apparatus (202) among the pipes comprised in the second pipe (203) is covered with a first fixing apparatus, the pipe located in the second heat storage apparatus (303) among the pipes comprised in the sixth pipe (304) is covered with a second fixing apparatus, and both the first fixing apparatus and the second fixing apparatus are thermally conductive media.

7. The device according to any one of claims 1-3, wherein when the air conditioning system is in a heating state, the first heat storage apparatus (202) transfers the released heat to the second heat storage apparatus (303).

8. An electric car (1), comprising a battery pack heating device (10), a battery pack (20), and a battery pack management system (30), wherein
the battery pack heating device (10) is the battery pack heating device according to any one of claims 1 to 7; and
the battery pack management system (30) is connected to the battery pack (20) and the battery pack heating device (10), and the battery pack management system (30) is configured to collect information about the battery pack (20) and control the battery pack heating device (10) to heat the battery pack (20).

## Patentansprüche

1. Batteriebaugruppen-Heizvorrichtung, wobei die Batteriebaugruppen-Heizvorrichtung ein Batteriebaugruppensystem und ein Heizsystem umfasst,
das Batteriebaugruppensystem wenigstens eine Flüssigkeits-Wärmeaustauscheinrichtung (101) und ein erstes Rohr (102) umfasst, wobei die Flüssigkeits-Wärmeaustauscheinrichtung (101) in Reihe mit dem ersten Rohr (102) verbunden ist und die Flüssigkeits-Wärmeaustauscheinrichtung (101) konfiguriert ist, eine Batteriebaugruppe (103) zu erwärmen,
das Heizsystem wenigstens ein Wärmeerzeugungselement (201), eine erste Wärmespeichereinrichtung (202), ein zweites Rohr (203) und ein Umschaltventil (204) umfasst, wobei das wenigstens eine Wärmeerzeugungselement (201) und die erste Wärmespeichereinrichtung (202) unter Verwendung des zweiten Rohrs (203) verbunden sind,
das Umschaltventil (204) zwischen dem ersten Rohr (102) und dem zweiten Rohr (203) angeordnet ist und das Umschaltventil (204) konfiguriert ist, das Verbinden und Trennen zwischen dem ersten Rohr (102) und dem zweiten Rohr (203) zu steuern; wenn sich das erste Rohr (102) und das zweite Rohr (203) in einem getrennten Zustand befinden, durch das wenigstens eine Wärmeerzeugungselement (201) erzeugte Wärme unter Verwendung des zweiten Rohrs (203) an die erste Wärmespeichereinrichtung (202) übertragen und unter Verwendung der ersten Wärmespeichereinrichtung (202) gespeichert wird, und
wenn das erste Rohr (102) und das zweite Rohr (203) in einem verbundenen Zustand sind, durch die erste Wärmespeichereinrichtung (202) freigesetzte Wärme unter Verwendung des ersten Rohrs (102) und des zweiten Rohrs (203) an die Flüssigkeits-Wärmeaustauscheinrichtung (101) übertragen wird, um die Batteriebaugruppe (103) zu erwärmen,
wobei die erste Wärmespeichereinrichtung (202) ein erstes Phasenwechselmaterial, ein Gehäuse und ein in der ersten Wärmespeichereinrichtung (202) angeordnetes Rohr unter in dem zweiten Rohr (203) enthaltenen Rohren umfasst und sich das erste Phasenwechselmaterial zwischen dem Gehäuse der ersten Wärmespeichereinrichtung (202) und dem zweiten Rohr (203) befindet,
wenn das wenigstens eine Wärmeerzeugungselement (201) die erzeugte Wärme unter Verwendung des zweiten Rohrs (203) an die erste Wärmespeichereinrichtung (202) überträgt, das erste Phasenwechselmaterial von einem festen Zustand in einen flüssigen übergeht; und
wenn die Batteriebaugruppe (103) im Batteriebaugruppensystem erwärmt wird, das erste Phasenwechselmaterial vom flüssigen in den festen Zustand übergeht,
wobei die Batteriebaugruppen-Heizvorrichtung ferner eine Klimaanlage umfasst, die Klimaanlage einen Wärmetauscher (301), eine zweite Wärmespeichereinrichtung (303) und ein sechstes Rohr (304) umfasst und das sechste Rohr (304) den Wärmetauscher (301) und die zweite Wärmespeichereinrichtung in Reihe verbindet; die zweite Wärmespeichereinrichtung (303) ein zweites Phasenwechselmaterial, ein Gehäuse und ein in der zweiten Wärmespeichereinrichtung (303) angeordnetes Rohr unter in dem sechsten Rohr (304) enthaltenen Rohren umfasst und das zweite Phasenwechselmaterial zwischen dem Gehäuse der zweiten Wärmespeichereinrichtung (303) und dem sechsten Rohr (304) angeordnet ist;
die zweite Wärmespeichereinrichtung (303) mit der ersten Wärmespeichereinrichtung (202) verbunden ist;
wenn sich das erste Rohr (102) und das zweite Rohr (203) im getrennten Zustand befinden und sich die Klimaanlage in einem Kühlzustand befindet, durch den Wärmetauscher (301) während des Betriebs absorbierte Wärme unter Verwendung des Rohrs in der Klimaanlage an die zweite Wärmespeichereinrichtung (303) übertragen wird und das zweite Phasenwechselmaterial vom festen Zustand in den flüssigen übergeht; und
wenn die Batteriebaugruppe (103) unter Verwendung der ersten Wärmespeichereinrichtung (202) erwärmt wird, das zweite Phasenwechselmaterial vom flüssigen in den festen Zustand übergeht.

2. Vorrichtung nach Anspruch 1, wobei das Heizsystem ferner ein erstes Steuerventil (205) und ein zweites Steuerventil (206) umfasst, das zweite Rohr (203) ein drittes Rohr (2031) und ein viertes Rohr (2032) umfasst, und das vierte Rohr (2032) ein Umgehungsrohr des dritten Rohrs (2031) ist;
das wenigstens eine Wärmeerzeugungselement (201) und das erste Steuerventil (205) in Reihe an dem dritten Rohr (2031) verbunden sind,
das zweite Steuerventil (206) in Reihe mit dem vierten Rohr (2032) verbunden ist; wenn das erste Rohr (102) und das zweite Rohr (203) im getrennten Zustand sind, das erste Steuerventil (205) in einem geöffneten Zustand ist und das zweite Steuerventil (206) in einem geschlossenen Zustand ist, das wenigstens eine Wärmeerzeugungselement (201) mit der ersten Wärmespeichereinrichtung (202) verbunden ist, und die durch das wenigstens eine Wärmeerzeugungselement (201) erzeugte Wärme unter Verwendung des zweiten Rohrs (203) zu der ersten Wärmespeichereinrichtung (202) übertragen wird und unter Verwendung der ersten Wärmespeichereinrichtung (202) gespeichert wird, und
wenn das erste Rohr (102) und das zweite Rohr (203) in dem verbundenen Zustand sind, das erste Steuerventil (205) in dem geschlossenen Zustand ist und das zweite Steuerventil (206) in dem geöffneten Zustand ist, das wenigstens eine Wärmeerzeugungselement (201) umgangen wird und die durch die erste Wärmespeichereinrichtung (202) freigesetzte Wärme unter Verwendung des ersten Rohrs (102) und des vierten Rohrs an die Flüssigkeits-Wärmeaustauscheinrichtung (101) übertragen wird, um die Batteriebaugruppe (103) zu erwärmen.

3. Vorrichtung nach Anspruch 2, wobei das Heizsystem ferner ein fünftes Rohr (208), ein drittes Steuerventil (209) und ein viertes Steuerventil (210) umfasst,
das fünfte Rohr (208) ein Umgehungsrohr der ersten Wärmespeichereinrichtung (202) ist und das dritte Steuerventil (209) in Reihe an dem fünften Rohr (208) verbunden ist; das vierte Steuerventil (210) in Reihe mit der ersten Wärmespeichereinrichtung (202) verbunden ist; und
wenn das erste Rohr (102) und das zweite Rohr (203) in dem verbundenen Zustand sind, das erste Steuerventil (205) in dem geöffneten Zustand ist, das zweite Steuerventil (206) in dem geschlossenen Zustand ist, das dritte Steuerventil (209) in dem geöffneten Zustand ist und das vierte Steuerventil (210) in dem geschlossenen Zustand ist, die erste Wärmespeichereinrichtung (202) umgangen wird und die durch das wenigstens eine Wärmeerzeugungselement (201) erzeugte Wärme unter Verwendung des dritten Rohrs (2031), des fünften Rohrs und des ersten Rohrs (102) zu der Flüssigkeits-Wärmeaustauscheinrichtung (101) übertragen wird, um die Batteriebaugruppe (103) zu erwärmen.

4. Vorrichtung nach einem der Ansprüche 1-3, wobei eine kritische Temperatur des ersten Phasenwechselmaterials im Bereich von 60 Grad Celsius bis 80 Grad Celsius liegt und die kritische Temperatur des zweiten Phasenwechselmaterials im Bereich von 40 Grad Celsius bis 50 Grad Celsius liegt.

5. Vorrichtung nach einem der Ansprüche 1-3, wobei das Gehäuse der ersten Wärmespeichereinrichtung (202) und das Gehäuse der zweiten Wärmespeichereinrichtung (303) ferner mit wärmeisolierenden Materialien umhüllt sind.

6. Vorrichtung nach einem der Ansprüche 1-3, wobei das in der ersten Wärmespeichereinrichtung (202) angeordnete Rohr unter den im zweiten Rohr (203) enthaltenen Rohren mit einer ersten Befestigungseinrichtung abgedeckt ist, das in der zweiten Wärmespeichereinrichtung (303) angeordnete Rohr unter den im sechsten Rohr (304) enthaltenen Rohren mit einer zweiten Befestigungseinrichtung abgedeckt ist und sowohl die erste Befestigungseinrichtung als auch die zweite Befestigungseinrichtung wärmeleitende Medien sind.

7. Vorrichtung nach einem der Ansprüche 1-3, wobei die erste Wärmespeichereinrichtung (202) die freigesetzte Wärme an die zweite Wärmespeichereinrichtung (303) überträgt, wenn sich die Klimaanlage in einem Heizzustand befindet.

8. Elektrofahrzeug (1), das eine Batteriebaugruppen-Heizvorrichtung (10), eine Batteriebaugruppe (20) und ein Batteriebaugruppen-Managementsystem (30) umfasst, wobei
die Batteriebaugruppen-Heizvorrichtung (10) die Batteriebaugruppen-Heizvorrichtung nach einem der Ansprüche 1 bis 7 ist; und
das Batteriebaugruppen-Managementsystem (30) mit der Batteriebaugruppe (20) und der Batteriebaugruppen-Heizvorrichtung (10) verbunden ist und das Batteriebaugruppen-Managementsystem (30) konfiguriert ist, Informationen über die Batteriebaugruppe (20) zu sammeln und die Batteriebaugruppen-Heizvorrichtung (10) zu steuern, die Batteriebaugruppe (20) zu erwärmen.

## Revendications

1. Dispositif de chauffage de bloc-batterie, le dispositif de chauffage de bloc-batterie comprenant un système de bloc-batterie et un système de chauffage ;
le système de bloc-batterie comprenant au moins un appareil d'échange de chaleur liquide (101) et une première conduite (102), l'appareil d'échange de chaleur liquide (101) étant connecté en série sur la première conduite (102), et l'appareil d'échange de chaleur liquide (101) étant configuré pour chauffer un bloc-batterie (103) ;
le système de chauffage comprenant au moins un élément générateur de chaleur (201), un premier appareil de stockage de chaleur (202), une deuxième conduite (203), et une vanne d'inversion (204), l'au moins un élément générateur de chaleur (201) et le premier appareil de stockage de chaleur (202) étant connectés au moyen de la deuxième conduite (203) ;
la vanne d'inversion (204) étant agencée entre la première conduite (102) et la deuxième conduite (203), et la vanne d'inversion (204) étant configurée pour commander une connexion et une déconnexion entre la première conduite (102) et la deuxième conduite (203) ;
lorsque la première conduite (102) et la deuxième conduite (203) sont dans un état déconnecté, la chaleur générée par l'au moins un élément générateur de chaleur (201) étant transférée au premier appareil de stockage de chaleur (202) au moyen de la deuxième conduite (203), et étant stockée au moyen du premier appareil de stockage de chaleur (202) ; et
lorsque la première conduite (102) et la deuxième conduite (203) sont dans un état connecté, la chaleur libérée par le premier appareil de stockage de chaleur (202) étant transférée à l'appareil d'échange de chaleur liquide (101) au moyen de la première conduite (102) et de la deuxième conduite (203) afin de chauffer le bloc-batterie (103), le premier appareil de stockage de chaleur (202) comprenant un premier matériau à changement de phase, une coque et une conduite située dans le premier appareil de stockage de chaleur (202) parmi des conduites contenues dans la deuxième conduite (203), et le premier matériau à changement de phase étant situé entre la coque du premier appareil de stockage de chaleur (202) et la deuxième conduite (203) ; lorsque l'au moins un élément générateur de chaleur (201) transfère la chaleur générée au premier appareil de stockage de chaleur (202) au moyen de la deuxième conduite (203), le premier matériau à changement de phase passant d'un état solide à un état liquide ; et
lorsque le bloc-batterie (103) dans le système de bloc-batterie est chauffé, le premier matériau à changement de phase passant de l'état liquide à l'état solide,
le dispositif de chauffage de bloc-batterie comprenant en outre un système de conditionnement d'air ; le système de conditionnement d'air comprenant un échangeur de chaleur (301), un deuxième appareil de stockage de chaleur (303) et une sixième conduite (304), et la sixième conduite (304) connectant l'échangeur de chaleur (301) et le deuxième appareil de stockage de chaleur en série ; le deuxième appareil de stockage de chaleur (303) comprenant un deuxième matériau à changement de phase, une coque et une conduite située dans le deuxième appareil de stockage de chaleur (303) parmi des conduites contenues dans la sixième conduite (304), et le deuxième matériau à changement de phase se situant entre la coque du deuxième appareil de stockage de chaleur (303) et la sixième conduite (304) ;
le deuxième appareil de stockage de chaleur (303) étant connecté au premier appareil de stockage de chaleur (202) ;
lorsque la première conduite (102) et la deuxième conduite (203) sont dans l'état déconnecté et que le système de conditionnement d'air est dans un état de refroidissement, la chaleur absorbée par l'échangeur de chaleur (301) au cours du fonctionnement étant transférée au deuxième appareil de stockage de chaleur (303) au moyen de la conduite dans le système de conditionnement d'air, et le deuxième matériau à changement de phase passant de l'état solide à l'état liquide ; et
lorsque le bloc-batterie (103) est chauffé au moyen du premier appareil de stockage de chaleur (202), le deuxième matériau à changement de phase passant de l'état liquide à l'état solide.

2. Dispositif selon la revendication 1, dans lequel le système de chauffage comprend en outre une première vanne de régulation (205) et une deuxième vanne de régulation (206), la deuxième conduite (203) comprend une troisième conduite (2031) et une quatrième conduite (2032), et la quatrième conduite (2032) est une conduite de dérivation de la troisième conduite (2031) ;
l'au moins un élément générateur de chaleur (201) et la première vanne de régulation (205) sont connectés en série sur la troisième conduite (2031) ;
la deuxième vanne de régulation (206) est connectée en série sur la quatrième conduite (2032) ;
lorsque la première conduite (102) et la deuxième conduite (203) sont dans l'état déconnecté, que la première vanne de régulation (205) est dans un état ouvert et que la deuxième vanne de régulation (206) est dans un état fermé, l'au moins un élément générateur de chaleur (201) est connecté au premier appareil de stockage de chaleur (202), et la chaleur générée par l'au moins un élément générateur de chaleur (201) est transférée au premier appareil de stockage de chaleur (202) au moyen de la deuxième conduite (203), et est stockée au moyen du premier appareil de stockage de chaleur (202) ; et
lorsque la première conduite (102) et la deuxième conduite (203) sont dans l'état connecté, que la première vanne de régulation (205) est dans l'état fermé et que la deuxième vanne de régulation (206) est dans l'état ouvert, l'au moins un élément générateur de chaleur (201) est contourné, et la chaleur libérée par le premier appareil de stockage de chaleur (202) est transférée à l'appareil d'échange de chaleur liquide (101) au moyen de la première conduite (102) et de la quatrième conduite, afin de chauffer le bloc-batterie (103).

3. Dispositif selon la revendication 2, dans lequel le système de chauffage comprend en outre une cinquième conduite (208), une troisième vanne de régulation (209) et une quatrième vanne de régulation (210) ;
la cinquième conduite (208) est une conduite de dérivation du premier appareil de stockage de chaleur (202), et la troisième vanne de régulation (209) est connectée en série sur la cinquième conduite (208) ;
la quatrième vanne de régulation (210) est connectée en série au premier appareil de stockage de chaleur (202) ; et
lorsque la première conduite (102) et la deuxième conduite (203) sont dans l'état connecté, que la première vanne de régulation (205) est dans l'état ouvert, que la deuxième vanne de régulation (206) est dans l'état fermé, que la troisième vanne de régulation (209) est dans l'état ouvert et que la quatrième vanne de régulation (210) est dans l'état fermé, le premier appareil de stockage de chaleur (202) est contourné, et la chaleur générée par l'au moins un élément générateur de chaleur (201) est transférée à l'appareil d'échange de chaleur liquide (101) au moyen de la troisième conduite (2031), de la cinquième conduite et de la première conduite (102), afin de chauffer le bloc-batterie (103).

4. Dispositif selon l'une quelconque des revendications 1 à 3, dans lequel une température critique du premier matériau à changement de phase est comprise entre 60 degrés Celsius et 80 degrés Celsius, et une température critique du deuxième matériau à changement de phase est comprise entre 40 degrés Celsius et 50 degrés Celsius.

5. Dispositif selon l'une quelconque des revendications 1 à 3, dans lequel la coque du premier appareil de stockage de chaleur (202) et la coque du deuxième appareil de stockage de chaleur (303) sont en outre enveloppées de matériaux d'isolation thermique.

6. Dispositif selon l'une quelconque des revendications 1 à 3, dans lequel la conduite située dans le premier appareil de stockage de chaleur (202) parmi les conduites contenues dans la deuxième conduite (203) est recouverte d'un premier appareil de fixation, la conduite située dans le deuxième appareil de stockage de chaleur (303) parmi les conduites contenues dans la sixième conduite (304) est recouverte d'un deuxième appareil de fixation, et le premier appareil de fixation et le deuxième appareil de fixation sont tous deux des milieux thermiquement conducteurs.

7. Dispositif selon l'une quelconque des revendications 1 à 3, dans lequel, lorsque le système de conditionnement d'air est dans un état de chauffage, le premier appareil de stockage de chaleur (202) transfère la chaleur libérée au deuxième appareil de stockage de chaleur (303).

8. Voiture électrique (1), comprenant un dispositif de chauffage de bloc-batterie (10), un bloc-batterie (20) et un système de gestion de bloc-batterie (30),
le dispositif de chauffage de bloc-batterie (10) étant un dispositif de chauffage de bloc-batterie selon l'une quelconque des revendications 1 à 7 ; et
le système de gestion de bloc-batterie (30) étant connecté au bloc-batterie (20) et au dispositif de chauffage de bloc-batterie (10), et le système de gestion de bloc-batterie (30) étant configuré pour collecter des informations concernant le bloc-batterie (20) et commander au dispositif de chauffage de bloc-batterie (10) de chauffer le bloc-batterie (20).
